# EUROPEAN PATENT APPLICATION

(11) **EP 4 560 996 A1**
(43) Date of publication of application: **28.05.2025**
(21) Application number: 22951632.3
(22) Date of filing: 22.07.2022
(51) Int. Cl.: H04L 27/00

(54) **MODEL INTERACTION METHOD, APPARATUS AND SYSTEM FOR HETEROGENEOUS ARTIFICIAL INTELLIGENCE (AI) FRAMEWORK**

(71) Applicant: Beijing Xiaomi Mobile Software Co., Ltd., Beijing 100085 (CN)
(72) Inventor: QIAO, Xuemei, Beijing 100085 (CN); MU, Qin, Beijing 100085 (CN)
(74) Representative: Stöckeler, Ferdinand
(86) International application number: PCT/CN2022/107536
(87) International publication number: WO 2024/016363

(57) **Abstract**

The present application discloses a model interaction method, apparatus and system for a heterogeneous artificial intelligence (AI) framework, which can be applied to a communication system. The method, when being executed by a network device, comprises: determining first framework information supported by a terminal device, wherein the first framework information comprises a first AI model framework supported by the terminal device; and determining a second AI model framework. By implementing the method of the present application, the influence of a difference in model frameworks between the network device and the terminal device on AI model interaction is effectively avoided, such that the transmission accuracy of an AI model can be effectively ensured, and the interaction effect of the AI model is improved.

## Description

### FIELD

The present disclosure relates to the field of communication technology, in particular to a model interaction method for a heterogeneous Artificial Intelligence (AI) framework, an apparatus and a system.

### BACKGROUND

In AI application field, model training needs to be performed (e.g., the model training is performed at a network device side, or at a terminal device side). In a case that computing power consumption of a terminal device is greater than a predetermined threshold or a computing capability supported by the terminal device is smaller than a predetermined threshold, the terminal device cannot complete the AI model training rapidly, and at this time the model training may be performed by a network device.

In the related art, during AI model interaction, model frameworks supported by the network device and the terminal device may be different, so a deployment of AI models obtained by training on the basis of the model framework may be adversely affected, and thereby an interaction effect of the AI models may be adversely affected.

### SUMMARY

The present disclosure provides in some embodiments a model interaction method for a heterogeneous AI framework, an apparatus and a system, applied to the field of communication technology, so as to effectively prevent AI model interaction from being adversely affected by a difference between model frameworks of a network device and a terminal device, thereby to ensure the transmission accuracy of the AI model and improve the interaction effect of the AI model.

In a first aspect, the present disclosure provides in some embodiments a model interaction method for a heterogeneous AI framework, performed by a network device, including: determining first framework information supported by a terminal device, in which the first framework information includes a first AI model framework supported by the terminal device; and determining a second AI model framework.

In a possible embodiment of the present disclosure, the first framework information further includes any one of: framework information indicating that the terminal device supports a model deployment; or framework information indicating that the terminal device supports a model conversion.

In a possible embodiment of the present disclosure, the model interaction method further includes: receiving first indication information sent by the terminal device, and the first indication information is used to indicate the first framework information supported by the terminal device.

In a possible embodiment of the present disclosure, the determining the second AI model framework includes: determining a plurality of candidates for framework information supported by the network device; and determining the second AI model framework based on the first framework information and the plurality of candidates for framework information.

In a possible embodiment of the present disclosure, the determining the second AI model framework based on the first framework information and the plurality of candidates for framework information includes: taking a candidate framework to which a first candidate of the plurality of candidates for framework information belongs as the second AI model framework; in which the first candidate is the same as the first framework information; or the candidate framework to which the first candidate of the plurality of candidates for framework information belongs supports the model conversion.

In a possible embodiment of the present disclosure, the model interaction method further includes: generating a first AI model based on the second AI model framework; and sending the first AI model to the terminal device, in which a first candidate of a plurality of candidates for framework information supported by the network device is the same as the first framework information; or converting the first AI model into a second AI model based on the first framework information, and sending the second AI model to the terminal device, in which a first candidate framework supports the model conversion, and the first AI model is generated based on the first candidate framework; or converting the first AI model into a second AI model based on an intermediate model representation framework; and sending the second AI model to the terminal device, in which the terminal device and the network device both support the intermediate model representation framework; or not sending the first AI model to the terminal device, in which the network device does not support the intermediate model representation framework, and the network device does not support the model conversion.

In a possible embodiment of the present disclosure, the model interaction method further includes: sending second indication information to the terminal device, in which the second indication information is used to indicate that a cell to which the network device belongs does not support an AI model deployment based on the first framework information; in which the network device meets at least one of: that a first candidate framework supported by the network device does not support the model conversion; that the network device does not support the model conversion; or that the network device does not support an intermediate model representation framework.

In a possible embodiment of the present disclosure, the model interaction method further includes: sending second indication information to the terminal device, in which the second indication information is used to indicate the terminal device to report a model to the network device, in which the network device meets one of: that a first candidate of a plurality of candidates for framework information supported by the network device is the same as the first framework information; or that the network device supports the model conversion.

In a possible embodiment of the present disclosure, the model interaction method further includes: sending second indication information to the terminal device, in which the second indication information is used to indicate the terminal device to select the first framework information from a plurality of pieces of first framework information.

In a possible embodiment of the present disclosure, the model interaction method further includes: determining whether or not the network device supports an intermediate model representation framework, to obtain a first determination result; determining whether or not the network device supports the model conversion, to obtain a second determination result; and sending a first AI model to the terminal device based on the first determination result and/or the second determination result.

In a possible embodiment of the present disclosure, the model interaction method further includes: receiving a third AI model sent by the terminal device, in which the third AI model is generated by the terminal device based on a content indicated by the network device; in which the content indicated by the network device at least includes a content indicated in the second indication information.

In a possible embodiment of the present disclosure, the model interaction method further includes: selecting the first framework information from a plurality of pieces of first framework information; sending third indication information to the terminal device, in which the third indication information is used to indicate the selected first framework information to the terminal device; generating a first AI model based on the selected first framework information; and sending the first AI model to the terminal device.

In a possible embodiment of the present disclosure, the selecting the first framework information from the plurality of pieces of first framework information includes: determining a plurality of candidates for framework information supported by the network device; and selecting the first framework information from the plurality of pieces of first framework information based on the plurality of candidates for framework information, in which the selected first framework information includes the selected first AI model framework, and the selected first framework information includes any one of: the first framework information which is the same as a first candidate of the plurality of candidates for framework information; or the first framework information which is different from the plurality of candidates for framework information, in which a first candidate framework to which the first candidate of the plurality of candidates for framework information belongs supports to convert a model into a model supported by the selected first framework information.

In a possible embodiment of the present disclosure, the model interaction method further includes: converting the first AI model into a fourth AI model based on the selected first AI model framework, in which the second AI model framework determined based on the selected first framework information supports the model conversion, and the first AI model is generated by the network device based on the second AI model framework; and sending the fourth AI model to the terminal device.

In a possible embodiment of the present disclosure, the sending the first AI model to the terminal device based on the first determination result and/or the second determination result includes: determining a model issuing mode, in which the first determination result indicates that the network device supports the intermediate model representation framework, and the second determination result indicates that the network device supports the model conversion; and sending the first AI model to the terminal device based on the model issuing mode.

In a possible embodiment of the present disclosure, the sending the first AI model to the terminal device based on the first determination result and/or the second determination result includes: processing the first AI model based on the intermediate model representation framework to obtain an AI model file, in which the first determination result indicates that the network device supports the intermediate model representation framework, and the second determination result indicates that the network device does not support the model conversion; and sending the AI model file to the terminal device.

In a possible embodiment of the present disclosure, the model interaction method further includes: sending second indication information to the terminal device, in which the second indication information indicates an AI model storage format of the AI model file, and the AI model file does not carry model format information.

In a second aspect, the present disclosure provides in some embodiments another model interaction method for a heterogeneous AI framework, performed by a terminal device, including: indicating first framework information supported by the terminal device to a network device, in which the first framework information includes a first AI model framework supported by the terminal device.

In a possible embodiment of the present disclosure, the first framework information includes any one of: framework information indicating that the terminal device supports a model deployment; or framework information indicating that the terminal device supports a model conversion.

In a possible embodiment of the present disclosure, the model interaction method further includes: sending first indication information to the network device, in which the first indication information is used to indicate the first framework information supported by the terminal device.

In a possible embodiment of the present disclosure, the determining the first framework information supported by the terminal device includes: determining second framework information supported by the network device, in which the second framework information includes a second model framework supported by the network device; and determining the first framework information supported by the terminal device based on a predefined protocol and/or the second framework information.

In a possible embodiment of the present disclosure, the model interaction method further includes: receiving a first AI model sent by the network device, in which the first AI model is generated by the network device; or receiving a second AI model sent by the network device, in which the second AI model is obtained by the network device by converting a first AI model based on the first framework information or based on an intermediate model representation framework, and the first AI model is generated by the network device.

In a possible embodiment of the present disclosure, the model interaction method further includes: receiving second indication information sent by the network device, in which the second indication information is used to indicate that a cell to which the network device belongs does not support an AI model deployment based on the first framework information.

In a possible embodiment of the present disclosure, the model interaction method further includes: receiving second indication information sent by the network device, in which the second indication information is used to indicate the terminal device to report a model to the network device; in which the terminal device meets one of: that the first framework information supported by the terminal device is the same as a first candidate of a plurality of candidates for framework information supported by the network device; or that the first framework information supported by the terminal device is different from the plurality of candidates for framework information supported by the network device.

In a possible embodiment of the present disclosure, the model interaction method further includes: receiving second indication information sent by the network device, in which the second indication information is used to indicate the terminal device to select the first framework information from a plurality of pieces of first framework information, in which the terminal device supports a plurality of pieces of first framework information.

In a possible embodiment of the present disclosure, the model interaction method further includes: determining framework information indicated by the network device based on a content indicated in the second indication information; generating a third AI model based on the framework information indicated by the network device; and sending the third AI model to the network device.

In a possible embodiment of the present disclosure, the model interaction method further includes: receiving a fourth AI model sent by the network device.

In a possible embodiment of the present disclosure, the model interaction method further includes: receiving an AI model file sent by the network device, in which the AI model file is obtained by the network device by processing a first AI model based on an intermediate model representation framework, the first AI model is generated by the network device based on a second model framework, and the second model framework is determined based on the first framework information.

In a possible embodiment of the present disclosure, the model interaction method further includes: receiving second indication information sent by the network device, in which the second indication information indicates an AI model storage format of the AI model file, and the AI model file does not carry model format information.

In a third aspect, the present disclosure provides in some embodiments a model interaction method for a heterogeneous AI framework, performed by a network device, including: indicating second framework information supported by the network device to a terminal device, in which the second framework information includes a second AI model framework supported by the network device.

In a possible embodiment of the present disclosure, the second framework information includes any one of: framework information indicating that the network device supports a model deployment; or framework information indicating that the network device supports a model conversion.

In a possible embodiment of the present disclosure, the model interaction method further includes: receiving a first AI model sent by the terminal device, in which the first AI model is generated by the terminal device based on a first AI model framework included in first framework information supported by the terminal device, and the first framework information is determined based on the second framework information; or receiving first indication information sent by the terminal device, in which the first indication information indicates first framework information and indicates that a first AI model does not carry model format information; or sending second indication to the terminal device, in which the second indication information indicates that the network device supports an intermediate model representation framework; or receiving a second AI model sent by the terminal device, in which the second AI model is generated by the terminal device.

In a fourth aspect, the present disclosure provides in some embodiments another model interaction method for a heterogeneous AI framework, performed by a terminal device, including: determining second framework information supported by a network device, in which the second framework information includes a second AI model framework supported by the network device.

In a possible embodiment of the present disclosure, the second framework information includes any one of: framework information indicating that the network device supports a model deployment; or framework information indicating that the network device supports a model conversion.

In a possible embodiment of the present disclosure, the model interaction method further includes: determining a first model framework corresponding to the second framework information, generating a first AI model based on the first model framework, and sending the first AI model to the network device; or sending first indication information to the network device, in which the first indication information indicates first framework information and indicates that the first AI model does not carry model format information; or receiving second indication information sent by the network device, in which the second indication information indicates that the network device supports an intermediate model representation framework; or determining whether or not the terminal device supports an intermediate model representation framework to obtain a third determination result, determining whether or not the terminal device supports a model conversion to obtain a fourth determination result, and sending a second AI model to the network device based on the third determination result and/or the fourth determination result, in which the network device supports an intermediate model representation framework, and the second AI model is generated by the terminal device.

In a fifth aspect, the present disclosure provides in some embodiments a communication apparatus. The communication apparatus is used to achieve a part of, or all of, functions of the network device in the method in the first aspect or the third aspect, e.g., the communication apparatus is used to achieve the functions in a part of, or all of, embodiments of the present disclosure, or separately achieve the function in any embodiment of the present disclosure. The functions are implemented by hardware, or by executing corresponding software by hardware. The hardware or software includes one or more units or modules corresponding to the functions.

In a possible embodiment of the present disclosure, the communication apparatus includes a transceiver module and a processing module. The processing module is configured to support the communication apparatus to achieve the corresponding functions in the method, and the transceiver module is configured to support the communication apparatus to communicate with the other device. The communication apparatus further includes a storage module coupled to the transceiver module and the processing module and configured to store therein necessary computer programs and data for the communication apparatus.

For example, the processing module is a processor, the transceiver module is a transceiver or a communication interface, and the storage module is a memory.

In a sixth aspect, the present disclosure provides in some embodiments another communication apparatus. The communication apparatus is used to achieve a part of, or all of, functions of the terminal device in the method in the second aspect or the fourth aspect, e.g., the communication apparatus is used to achieve the functions in a part of, or all of, embodiments of the present disclosure, or separately achieve the function in any embodiment of the present disclosure. The functions are implemented by hardware, or by executing corresponding software by hardware. The hardware or software includes one or more units or modules corresponding to the functions.

In a possible embodiment of the present disclosure, the communication apparatus includes a transceiver module and a processing module. The processing module is configured to support the communication apparatus to achieve the corresponding functions in the method, and the transceiver module is configured to support the communication apparatus to communicate with the other device. The communication apparatus further includes a storage module coupled to the transceiver module and the processing module and configured to store therein necessary computer programs and data for the communication apparatus.

In a seventh aspect, the present disclosure provides in some embodiments a communication apparatus, including a processor. The processor is configured to call a computer program in the memory, so as to implement the model interaction method in the first aspect, or implement the model interaction method in the third aspect.

In an eighth aspect, the present disclosure provides in some embodiments a communication apparatus, including a processor. The processor is configured to call a computer program in the memory, so as to implement the model interaction method in the second aspect, or implement the model interaction method in the fourth aspect.

In a ninth aspect, the present disclosure provides in some embodiments a communication apparatus, including a processor and a memory. The memory is configured to store therein a computer program, and the processor is configured to execute the computer program stored in the memory, so as to enable the communication apparatus to implement the model interaction method in the first aspect, or implement the model interaction method in the third aspect.

In a tenth aspect, the present disclosure provides in some embodiments a communication apparatus, including a processor and a memory. The memory is configured to store therein a computer program. The processor is configured to execute a computer program stored in the memory, so as to enable the communication apparatus to implement the model interaction method in the second aspect, or implement the model interaction method in the fourth aspect.

In an eleventh aspect, the present disclosure provides in some embodiments a communication apparatus, including a processor and an interface circuit. The interface circuit is configured to receive code instructions and transmit the code instructions to the processor. The processor is configured to execute the code instructions, so as to enable the communication apparatus to implement the model interaction method in the first aspect, or implement the model interaction method in the third aspect.

In a twelfth aspect, the present disclosure provides in some embodiments a communication apparatus, including a processor and an interface circuit. The interface circuit is configured to receive code instructions and transmit the code instructions to the processor. The processor is configured to execute the code instructions, so as to enable the communication apparatus to implement the model interaction method in the second aspect, or implement the model interaction method in the fourth aspect.

In a thirteenth aspect, the present disclosure provides in some embodiments a communication system, including the communication apparatus in the fifth aspect and the communication apparatus in the sixth aspect, or including the communication apparatus in the seventh aspect and the communication apparatus in the eighth aspect, or including the communication apparatus in the ninth aspect and the communication apparatus in the tenth aspect, or including the communication apparatus in the eleventh aspect and the communication apparatus in the twelfth aspect.

In a fourteenth aspect, the present disclosure provides in some embodiments a computer-readable storage medium storing therein instructions to be used by the network device. The instructions are executed so as to enable the network device to implement the model interaction method in the first aspect, or implement the model interaction method in the third aspect.

In a fifteenth aspect, the present disclosure provides in some embodiments a computer-readable storage medium storing therein instructions to be used by the terminal device. The instructions are executed so as to enable the terminal device to implement the model interaction method in the second aspect, or implement the model interaction method in the fourth aspect.

In a sixteenth aspect, the present disclosure provides in some embodiments a computer program product including a computer program. In a case that the computer program is executed by a computer so as to implement the model interaction method in the first aspect, or implement the model interaction method in the third aspect.

In a seventeenth aspect, the present disclosure provides in some embodiments a computer program product including a computer program. In a case that the computer program is executed by a computer so as to implement the model interaction method in the second aspect, or implement the model interaction method in the fourth aspect.

In an eighteenth aspect, the present disclosure provides in some embodiments a chip system, including at least one processor and an interface, and configured to support the network device to achieve functions involved in the first aspect or the third aspect, e.g., determine or process at least one of data or information involved in the above-mentioned method.

In a possible design, the chip system further includes a memory, and the memory is configured to store therein a computer program and data desired for the network device. The chip system includes a chip, or includes a chip and other discrete elements.

In a nineteenth aspect, the present disclosure provides in some embodiments a chip system, including at least one processor and an interface, and configured to support the terminal device to achieve functions involved in the second aspect or the fourth aspect, e.g., determine or process at least one of data or information involved in the above-mentioned method.

In a possible design, the chip system further includes a memory, and the memory is configured to store therein a computer program and data desired for the terminal device. The chip system includes a chip, or includes a chip and other discrete elements.

In a twentieth aspect, the present disclosure provides in some embodiments a computer program. In a case that the computer program is executed by a computer, so as to implement the model interaction method in the first aspect, or implement the model interaction method in the third aspect.

In a twenty-first aspect, the present disclosure provides in some embodiments a computer program. In a case that the computer program is executed by a computer, so as to implement the model interaction method in the second aspect, or implement the model interaction method in the fourth aspect.

In a word, the method, the apparatus, the device, the chip system, the storage medium, the computer program and the computer program product provided in the embodiments of the present disclosure have the following technical effects.

The first framework information supported by the terminal device is determined, the first framework information includes the first AI model framework supported by the terminal device, and then the second AI model framework is determined. By implementing the method in the embodiments of the present disclosure, it is able to prevent the AI model interaction from being adversely affected by the difference between the model frameworks of the network device and the terminal device, thereby to ensure the transmission accuracy of the AI model and improve the interaction effect of the AI model.

### BRIEF DESCRIPTION OF THE DRAWINGS

In order to illustrate the technical solutions of the embodiments of the present disclosure or the background in a clearer manner, the drawings desired for the embodiments of the present disclosure or the background will be described hereinafter briefly.
FIG. 1 is a schematic view showing architecture of a communication system according to an embodiment of the present disclosure;
FIG. 2 is a flowchart of a model interaction method for a heterogeneous AI framework according to an embodiment of the present disclosure;
FIG. 3 is another flowchart of the model interaction method for a heterogeneous AI framework according to an embodiment of the present disclosure;
FIG. 4 is yet another flowchart of the model interaction method for a heterogeneous AI framework according to an embodiment of the present disclosure;
FIG. 5 is still yet another flowchart of the model interaction method for a heterogeneous AI framework according to an embodiment of the present disclosure;
FIG. 6 is still yet another flowchart of the model interaction method for a heterogeneous AI framework according to an embodiment of the present disclosure;
FIG. 7 is still yet another flowchart of the model interaction method for a heterogeneous AI framework according to an embodiment of the present disclosure;
FIG. 8 is still yet another flowchart of the model interaction method for a heterogeneous AI framework according to an embodiment of the present disclosure;
FIG. 9 is still yet another flowchart of the model interaction method for a heterogeneous AI framework according to an embodiment of the present disclosure;
FIG. 10 is still yet another flowchart of the model interaction method for a heterogeneous AI framework according to an embodiment of the present disclosure;
FIG. 11 is still yet another flowchart of the model interaction method for a heterogeneous AI framework according to an embodiment of the present disclosure;
FIG. 12 is still yet another flowchart of the model interaction method for a heterogeneous AI framework according to an embodiment of the present disclosure;
FIG. 13 is still yet another flowchart of the model interaction method for a heterogeneous AI framework according to an embodiment of the present disclosure;
FIG. 14 is a block diagram of a communication apparatus according to an embodiment of the present disclosure;
FIG. 15 is a block diagram of the communication apparatus according to an embodiment of the present disclosure; and
FIG. 16 is a block diagram of a chip according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. They are merely examples of apparatuses and methods consistent with some aspects of the present disclosure as recited in the appended claims.

Terms used in the embodiments of the present disclosure are only for the purpose of describing specific embodiments, and shall not be construed to limit the present disclosure. As used in the embodiments of the present disclosure and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the present disclosure for describing various information, these information should not be limited by these terms. These terms are only used for distinguishing information of the same type from others. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

For ease of understanding, terms involved in the embodiments of the present disclosure will be introduced at first.

### 1. AI

AI refers to a new technical science of studying and developing a theory, a method, a technique and an application system for simulating, extending and expanding a human intelligence. As a branch of a computer science, the AI intends to understand an intelligence essence, and produce a new intelligence machine capable of making a response in a way similar to the human intelligence. Studies in the field include robot, speech recognition, image recognition, natural language processing, expert system, etc.

### 2. Model framework

The model framework provides, for a developer, an interface (a mathematical operation) for creating a neural network and automatically training the neural network (performing a reverse-mode differentiation to approximately solve an optimal value), so as to obtain a neural network model (an approximation function) for solving such problems as classification, regression and fitting, thereby to be adapted to such application scenarios as target classification and speech.

In order to understand the model interaction method for a heterogeneous AI framework in the embodiments of the present disclosure in a better manner, an applicable communication system will be described hereinafter.

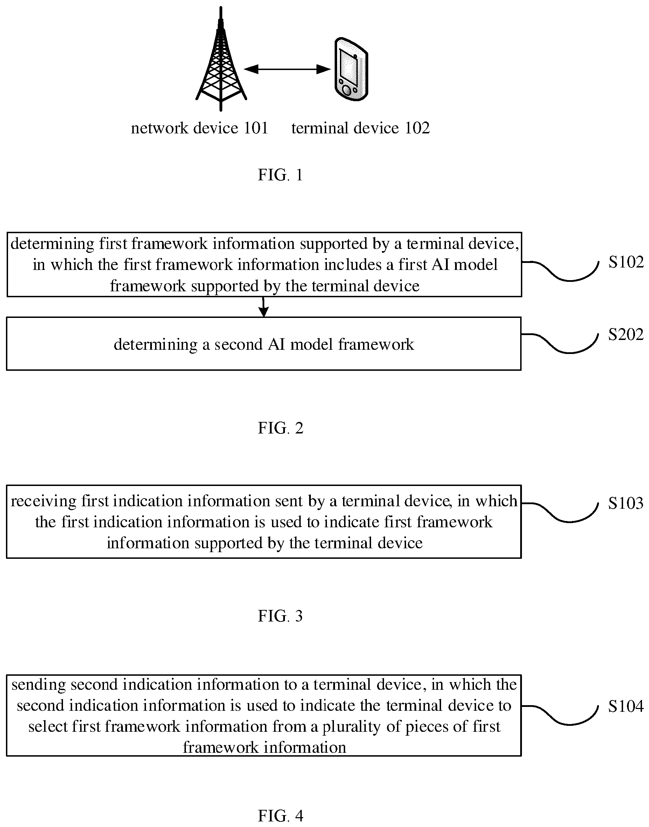

Referring to FIG. 1, which is a schematic view showing architecture of a communication system according to an embodiment of the present disclosure, the communication system includes, but is not limited to, one network device and one terminal device. Quantities and forms of the devices in FIG. 1 are for illustrative purposes only, but shall not be construed as limiting the embodiments of the present disclosure. In actual use, the communication system may include two or more network devices, and two or more terminal devices. For example, as shown in FIG. 1, the communication system includes one network device 101 and one terminal device 102.

It should be appreciated that, the technical solutions in the embodiments of the present disclosure may be applied to various communication systems, e.g., a Long Term Evolution (LTE) system, a 5^{th}-Generation (5G) mobile communication system, a 5G New Radio (NR) system, or any novel mobile communication system that may occur in the future.

In the embodiments of the present disclosure, the network device 101 is an entity at a network side for sending or receiving a signal. For example, the network device 101 is an evolved NodeB (eNB), a Transmission Reception Point (TRP), a next generation NodeB (gNB) in the NR system, a base station in the future mobile communication system, or an access point in a Wireless Fidelity (WiFi) system. A specific technology adopted by the network device and a specific device form thereof will not be particularly defined herein.

The network device in the embodiments of the present disclosure may consist of a Central Unit (CU) and a Distributed Unit (DU), and the CU may also be called as control unit. With the CU-DU structure, a protocol layer for the network device, e.g., a base station, is divided, i.e., a part of functions of the protocol layer are centrally controlled by the CU, a part of, or all of, the remaining functions of the protocol layer are distributed in the DU, and the DU is controlled by the CU.

In the embodiments of the present disclosure, the terminal device 102 is an entity at a user side for receiving or sending a signal, e.g., a mobile phone. The terminal device may also be called as terminal, User Equipment (UE), Mobile Station (MS), Mobile Terminal (MT), etc. The terminal device may be a vehicle having a communication function, a smart vehicle, a mobile phone, a wearable device, a pad, a computer having a wireless transceiver function, a Virtual Reality (VR) terminal, an Augmented Reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc.

In the embodiments of the present disclosure, a specific technology adopted by the terminal device and a specific device form thereof will not be particularly defined.

It should be appreciated that, the communication system described herein is used to describe the technical solutions in the embodiments of the present disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

A model interaction method for a heterogeneous AI framework and an apparatus thereof provided in the embodiments of the present disclosure will be described hereinafter in details in conjunction with the drawings. FIG. 2 is a flowchart of a model interaction method for a heterogeneous AI framework according to an embodiment of the present disclosure, and this method is executed by a network device. The model interaction method for the heterogeneous AI framework may be applied to the network device, e.g., an evolved NodeB, a transmission point, a next-generation base station in a NR system, a base station in other future mobile communication system, or an access node in a WiFi system, which will not be particularly defined herein.

As shown in FIG. 2, the model interaction method includes, but is not limited to, the following steps.

S102: first framework information supported by a terminal device is determined. The first framework information includes a first AI model framework supported by the terminal device.

AI refers to a new technical science of studying and developing a theory, a method, a technique and an application system for simulating, extending and expanding a human intelligence. An AI model refers to an algorithm used by the AI. The first AI model refers to an AI model generated by the network device based on a second model framework.

The present disclosure further provides in some embodiments a model interaction method for a heterogeneous AI model. The first framework information further includes any one of: framework information indicating that the terminal device supports a model deployment; or framework information indicating that the terminal device supports a model conversion. In this way, it is able to effectively improve the comprehensiveness of representing, with the first framework information, framework information supported by the terminal device.

S202: a second AI model framework is determined.

A framework is used to automatically train an initial model (e.g., performing a reverse-mode differentiation to approximately solve an optimal value), so as to obtain an AI model that meets an expected demand.

Framework information is information for describing a framework, and it includes, for example, a framework type, a framework name, a framework version, etc. The first framework information refers to relevant information describing frameworks supported by the terminal device, e.g., the framework type, the framework name and the framework version of the framework supported by the terminal device.

For example, the terminal device indicates to the network device model frameworks supported to be parsed by the network device. For example, in a case that the framework of the terminal device is A but it indicates that the terminal device can parse a model generated by the network device based on a framework B, the network device may directly send the model generated based on the framework B to the terminal device.

The terminal device may also report that it supports to parse a plurality of frameworks B, C, D, E and F. In a case that a matched framework is C, the network device may further indicate the terminal device that the supported framework is C.

The first AI model framework refers to an AI model framework supported by the terminal device.

The second AI model framework refers to an AI model framework supported by the network device, and it corresponds to the first framework information. In a case that two frameworks correspond to each other, they have the same type or the same version or they are matched with each other; and in a case that the two frameworks are matched with each other, they have different types but the model conversion is supported, or they have the same type and different versions but version compatibility is supported, which will not be particularly defined herein.

In an embodiment of the present disclosure, the quantity of first framework information supported by the terminal device may be multiple, the quantity of framework information supported by the network device may also be multiple, and there may exist one or more second model frameworks corresponding to the first framework information.

It should be appreciated that, the framework information supported by the terminal device may be different from the framework information supported by the network device, and the model types supported by different frameworks may also be different. In the embodiments of the present disclosure, the first framework information supported by the terminal device is determined, the first framework information includes the first AI model framework supported by the terminal device, and then the second AI model framework is determined. In this way, it is able to effectively increase the adaptability between the second AI model framework and the framework supported by the terminal device.

The present disclosure further provides in some embodiments a model interaction method for a heterogeneous AI framework, and the determining the first framework information supported by the terminal device further includes determining the first framework information supported by the terminal device based on a predefined protocol. The first framework information supported by the terminal device is obtained rapidly based on the predefined protocol, so as to improve the interactive matching efficiency.

The predefined protocol refers to a protocol set in advance for an interaction procedure between the network device and the terminal device based on an application scenario.

For example, the predefined protocol may speculate that both the network device and the terminal device use the same AI framework, e.g., use a specified version in a plurality of versions of a Convolution Architecture For Feature Extraction (Caffe), e.g., caffe or caffe2. Alternatively, the predefined protocol may also speculate that both the network device and the terminal device use different AI frameworks.

For example, the predefined protocol may speculate that a base station and the terminal device use predefined AI frameworks matching each other. For example, the base station uses pytorch (an open-source Python machine learning library used for applications such as natural language processing), and the terminal device uses a framework NCNN (a forward computation framework for providing an optimized high-performance neural network for the terminal device); or a framework, e.g., pytorch, is used for model training, and a framework, e.g., NCNN, is used for model inference and development. In a case that the model training is completed and the model deployment is performed, the predefined protocol speculates that a model trained based on pytorch is supported to be converted into a model supported by NCNN.

Alternatively, a model translation is performed with an intermediate model representation framework. For example, the predefined protocol speculates that an Open Neural Network Exchange (ONNX) is used or an AI model representation framework standardized by other institutions, e.g., Institute of Electrical and Electronics Engineers (IEEE), is used.

In this embodiment of the present disclosure, the first framework information supported by the terminal device is determined, the first framework information includes the first AI model framework supported by the terminal device, and then the second AI model framework is determined. In this way, it is able to prevent the AI model interaction from being adversely affected by the difference between the model frameworks of the network device and the terminal device, thereby to ensure the transmission accuracy of the AI model and improve the interaction effect of the AI model.

FIG. 3 is another flowchart of a model interaction method for a heterogeneous AI framework according to an embodiment of the present disclosure, and this method is applied to a network device. As shown in FIG. 3, the method includes, but is not limited to, the following steps.

S103: first indication information sent by a terminal device is received, and the first indication information is used to indicate first framework information supported by the terminal device.

An indication message refers to a carrier for information exchange between the terminal device and the network device, and the indication message may be an electric signal or an electromagnetic wave. The first indication information is generated by the terminal device, and it is used to at least indicate the first framework information supported by the terminal device.

In this embodiment of the present disclosure, the first indication information sent by the terminal device is received, and the first indication information is used to indicate the first framework information supported by the terminal device, so as to provide a reliable basis for the network device to determine the first framework information supported by the terminal device.

The present disclosure further provides in some embodiments a model interaction method for a heterogeneous AI framework, and the determining the second AI model framework includes: determining a plurality of candidates for framework information supported by the network device; and determining the second AI model framework based on the first framework information and the plurality of candidates for framework information. Hence, based on whether or not a first candidate of the plurality of candidates for framework information is the same as the first framework information, it is able to accurately, flexibly determine the second AI model framework corresponding to the first framework information.

A candidate framework refers to a model framework supported by the network device, and the candidates for framework information refer to framework information corresponding to the candidate frameworks. The quantity of candidates for framework information may be one or multiple, which will not be particularly defined herein.

It should be appreciated that, types of the model frameworks supported by different network devices may be different. Hence, in this embodiment of the present disclosure, the first candidate of the plurality of candidates for framework information supported by the network device is determined, so as to provide a reliable basis for determining the second AI model framework corresponding to the first framework information.

The present disclosure further provides in some embodiments a model interaction method for a heterogeneous AI framework, and the determining the second AI model framework based on the first framework information and the plurality of candidates for framework information includes: taking a candidate framework to which the first candidate of the plurality of candidates for framework information belongs as the second AI model framework. The first candidate is the same as the first framework information; or the candidate framework to which the first candidate of the plurality of candidates for framework information belongs supports the model conversion. In this way, it is able to effectively improve the reliability of a determination procedure of the second AI model framework.

The present disclosure further provides in some embodiments a model interaction method for a heterogeneous AI framework, which further includes: generating a first AI model based on the second AI model framework and sending the first AI model to the terminal device. The first candidate of the plurality of candidates for framework information supported by the network device is the same as the first framework information, so as to implement the model inaction procedure from the network device to the terminal device, thereby to ensure the adaptability between the first AI model and the terminal device.

The first AI model can be accurately parsed and deployed by a first framework. For example, the first AI model may be converted into a representation form supported by the first framework in the second model framework of the network device. Alternatively, a model representation form supported by the second model framework is directly generated and then issued to the terminal device, the model conversion is performed using a corresponding model conversion function of the first model framework of the terminal device, and then the converted model is deployed in the terminal device.

The present disclosure further provides in some embodiments a model interaction method for a heterogeneously AI framework, which further includes: converting the first AI model into a second AI model based on the first framework information, and sending the second AI model to the terminal device. A first candidate framework supports the model conversion, and the first AI model is generated based on the first candidate framework, so as to enable the second AI model to be adapted to the first framework information supported by the terminal device, thereby to enable the terminal device to accurately parse the second AI model.

The second AI model may be an AI model obtained by converting the first AI model based on the first framework information.

In other words, in a case that the plurality of candidates for framework information is different from the first framework information but the first candidate framework supports the model conversion, the first AI model generated based on the plurality of candidates for framework information is converted into the second AI model based on the first framework information supported by the terminal device, so as to enable the second AI model to be adapted to the first framework information supported by the terminal device, thereby to enable the terminal device to accurately parse the second AI model.

The present disclosure provides in some embodiments a model interaction method for a heterogeneous AI framework, which further includes: converting the first AI model into a second AI model based on an intermediate model representation framework, and sending the second AI model to the terminal device. Both the terminal device and the network device support the intermediate model representation framework. Hence, the intermediate model representation framework is supported by the terminal device and the network device, so as to improve a deployment effect based on the intermediate model representation framework.

With the intermediate model representation framework, the models obtained by training using various frameworks are converted into a model of the same format for storage, so as to facilitate the transmission and deployment of the AI model in a cross-platform and cross-framework manner.

The present disclosure further provides in some embodiments a model interaction method for a heterogeneous AI framework, which further includes: not sending the first AI model to the terminal device. The network device does not support the intermediate model representation framework, and the network device does not support the model conversion.

It should be appreciated that, in a case that the network device does not support the intermediate model representation framework and a second determination result indicates that the network device does not support the model conversion, the first AI model may be not applicable to the terminal device. At this time, the first AI model is not sent to the terminal device, so as to effectively reduce resource consumption, and effectively prevent any interference caused by the first AI model on the terminal device.

The present disclosure further provides in some embodiments a model interaction method for a heterogeneous AI framework, which includes: sending second indication information to the terminal device. The second indication information is used to indicate that a cell to which the network device belongs does not support an AI model deployment based on the first framework information. The network device meets at least one of: that a first candidate framework supported by the network device does not support the model conversion; that the network device does not support the model conversion; or that the network device does not support an intermediate model representation framework. With the second indication information, it is able to indicate the terminal device in time that the cell to which the network device belongs does not support the AI model deployment based on the first framework information, so as to enable the terminal device to make a response rapidly.

The second indication information is a message for indicating that the cell to which the network device belongs does not support an AI model inference based on the first framework information.

The present disclosure further provides in some embodiments a model interaction method for a heterogeneous AI framework, which includes: sending second indication information to the terminal device. The second indication information is used to indicate the terminal device to report a model to the network device. The network device meets one of: that a first candidate of a plurality of candidates for framework information supported by the network device is the same as the first framework information; or that the network device supports the model conversion. Hence, it is able to indicate the terminal device to report the model to the network device based on the second indication information.

FIG. 4 is a flowchart of another model interaction method for a heterogeneous AI framework according to an embodiment of the present disclosure, and this method is applied to a network device. As shown in FIG. 4, the method includes, but is not limited to, the following step.

S104: second indication information is sent to a terminal device. The second indication information is used to indicate the terminal device to select first framework information from a plurality of pieces of first framework information.

The selected first framework information refers to framework information in the plurality of pieces of first framework information for a current interaction procedure, and the selected first framework information is framework information determined by the network device and used by the terminal device to perform a model parsing, which will not be particularly defined herein.

In a case that there is one piece of first framework information in the plurality of pieces of first framework information which is the same as a first candidate of a plurality of candidates for framework information, the first framework information is directly taken as the selected first framework information. In a case that there are two or more pieces of first framework information which are the same as the first candidate, one of them is selected by the base station and indicated to the terminal device, or one of them is selected by the base station based on a predefined rule and indicated to the terminal device, which will not be particularly defined herein.

In this embodiment of the present disclosure, the second indication information is sent to the terminal device, and the second indication information is used to indicate the terminal device to select the first framework information from the plurality of pieces of first framework information. Hence, it is able to accurately indicate a determination procedure of the first framework information in the terminal device based on the second indication information, thereby to improve the reliability of the selected first framework information.

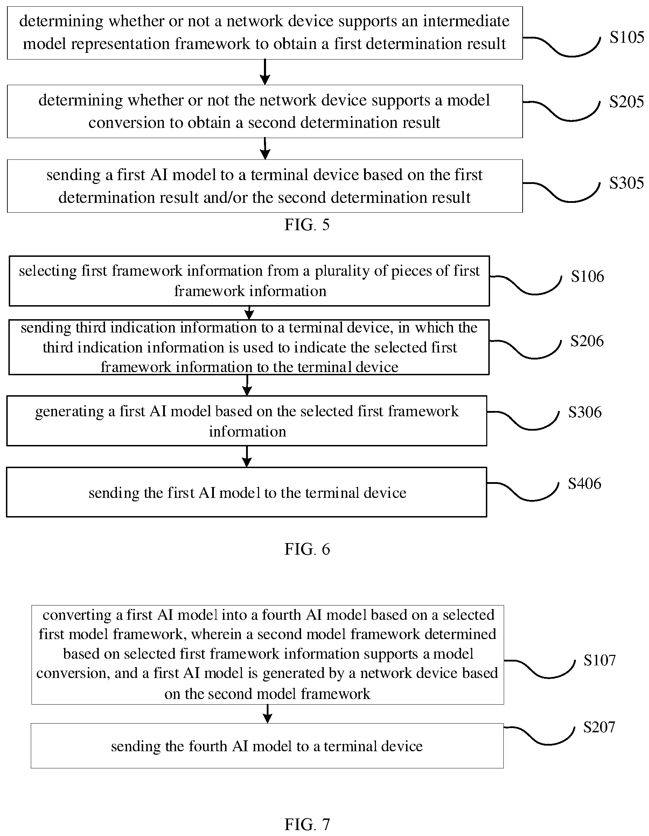

FIG. 5 is a flowchart of another model interaction method for a heterogeneous AI framework according to an embodiment of the present disclosure, and this method is applied to a network device. As shown in FIG. 5, the method includes, but is not limited to, the following steps.

S105: whether or not an intermediate model representation framework is supported by the network device is determined to obtain a first determination result.

For example, the first determination result indicates that the network device supports the intermediate model representation framework, or the network device does not support the intermediate model representation framework.

S205: whether or not the network device supports a model conversion is determined to obtain a second determination result.

For example, in a case that there is only one type of intermediate model representation framework, framework information to be specifically used by an AI model is not indicated to the terminal device. In a case that there is a plurality of intermediate model representation frameworks supported by the terminal device, the framework information for the network device is indicated to the terminal device. In a case that the network device supports both the model conversion and the intermediate model representation framework supported by the terminal device, the base station determines a specific issuing mode on its own initiative, or determines priority levels based on a predefined protocol. In a case that the network device determines the issuing mode on its own initiative, the network device may also indicate the framework information to be specifically used by the AI model to the terminal device.

For example, the second determination result indicates that the network device supports the model conversion or the network device does not support the model conversion.

S305: the first AI model is sent to the terminal device based on the first determination result and/or the second determination result.

For example, a reporting mode of the first AI model may include any of the followings.

In a first mode, in a case that a first candidate of a plurality of candidates for framework information supported by the network device is the same as framework information indicating that the terminal device supports the model deployment, a message for indicating the terminal device to generate and report a model is sent to the terminal device, and this message is called as fourth indication information.

In other words, the fourth indication information indicates the terminal device to generate and report the model.

In response to an indication of the fourth indication information, the terminal device generates the AI model based on the framework information indicating that the terminal device supports the model deployment, and reports the AI model to the network device, which will not be particularly defined herein.

In a second mode, in a case that the plurality of candidates for framework information supported by the network device is different from the framework information indicating that the terminal device supports the model deployment and the network device supports the model conversion, the fourth indication information is sent to the terminal device. The fourth indication information indicates the terminal device to generate and report the model.

In response to an indication of the fourth indication information, the terminal device generates the AI model based on the framework information indicating that the terminal device supports the model deployment, and reports the AI model to the network device so that the network device performs the model conversion on the received AI model, which will not be particularly defined herein.

In a third mode, in a case that the plurality of candidates for framework information supported by the network device is different from the framework information indicating that the terminal device supports the model deployment and the network device does not support the model conversion, second indication information is sent to the terminal device. The second indication information indicates a cell to which the network device belongs does not support an AI model inference based on the first framework information.

The terminal device determines, based on the second indication information, that the cell to which the network device belongs does not support the AI model inference based on the first framework information.

In a fourth mode, in a case that the first candidate of the plurality of candidates for framework information supported by the network device is the same as the framework information indicating that the terminal device supports the model conversion, a message for indicating the terminal device to convert and report a model to the terminal device, and this message may also be indicated by the fourth indication information.

In response to an indication of the fourth indication information, the terminal device converts the AI model based on the framework information indicating that the terminal device supports the model conversion, and reports the AI model obtained through conversion to the network device, which will not be particularly defined herein.

In other words, the indicating the terminal device to report the model via the fourth indication information includes: indicating the terminal device to generate and report the model, or indicating the terminal device to convert the model and report the model obtained by conversion, which will not be particularly defined herein.

In a fifth mode, in a case that the plurality of candidates for framework information supported by the network device is different from the framework information indicating that the terminal device supports the model conversion and the network device does not support the model conversion, the second indication information is sent to the terminal device.

In a sixth mode, in a case that the plurality of candidates for framework information supported by the network device is different from the framework information indicating that the terminal device supports the model conversion and the network device supports the model conversion, the fourth indication information is sent to the terminal device. The fourth indication information indicates the terminal device to generate and report the model.

In response to an indication of the fourth indication information, the terminal device generates the AI model, and reports the AI model to the network device so that the network device performs the model conversion on the received AI model, which will not be particularly defined herein.

In a seventh mode, in a case that there is a plurality of pieces of framework information indicating that the terminal device supports the model deployment, fifth indication information is sent to the terminal device. The fifth indication information indicates the terminal device to select the framework information from the plurality of pieces of framework information indicating that the terminal device supports the model deployment.

In response to an indication from the network device, the terminal device directly selects the framework information from the plurality of pieces of framework information to generate the model, which will not be particularly defined herein.

The network device may select the framework information from the plurality of pieces of framework information on its own initiative and indicate it to the terminal device, or the network device may also select the framework information from the plurality of pieces of framework information based on a predefined rule and indicate it to the terminal device, which will not be particularly defined herein.

In an eighth mode, in a case that there is a plurality of pieces of framework information indicating that the terminal device supports the model conversion, the fifth indication information is sent to the terminal device. The fifth indication information may further indicate the terminal device to select the framework information from the plurality of pieces of framework information indicating that the terminal device supports the model conversion.

In response to an indication from the network device, the terminal device directly selects the framework information from the plurality of pieces of framework information to convert the model, which will not be particularly defined herein.

The network device may select the framework information from the plurality of pieces of framework information indicating that the terminal device supports the model conversion on its own initiative and indicate it to the terminal device, or the network device may also select the framework information from the plurality of pieces of framework information based on a predefined rule and indicate it to the terminal device, which will not be particularly defined herein.

In a ninth mode, in a case that the plurality of candidates for framework information supported by the network device is different from the framework information indicating that the terminal device supports the model conversion, the second indication information is sent to the terminal device. The second indication information indicates that the cell to which the network device belongs does not support the AI model inference based on the first framework information.

The modes of reporting, by the terminal device, the AI model to the network device have been described hereinabove. In any other possible modes, the network device makes a decision about whether or not the AI model is sent by the terminal device and sends the decision to the terminal device so that the terminal device performs a corresponding operation based on the decision of the network device, or any other possible mode is supported, which will not be particularly defined herein.

In this embodiment of the present disclosure, whether or not the network device supports the intermediate model representation framework is determined to obtain the first determination result, whether or not the network device supports the model conversion is determined to obtain the second determination result, and then the first AI model is sent to the terminal device based on the first determination result and/or the second determination result. In this way, a corresponding sending strategy is made flexibly based on the first determination result and/or the second determination result, so as to improve the adaptability between the sending strategy of the first AI model and a personalized application scenario.

The present disclosure further provides in some embodiments a model interaction method for a heterogeneous AI framework, which further includes: receiving a third AI model sent by the terminal device. The third AI model is generated by the terminal device based on a content indicated by the network device. The content indicated by the network device at least includes a content indicated in the second indication information. In this way, in a case that the cell to which the network device belongs does not support the AI model inference based on the first framework information, the terminal device generates the AI model and sends it to the network device.

The third AI model refers to an AI model generated by the terminal device based on the content indicated by the network device.

FIG. 6 is a flowchart of another model interaction method for a heterogeneous AI framework according to an embodiment of the present disclosure, and this method is applied to a network device. As shown in FIG. 6, the method includes, but is not limited to, the following steps.

S106: first framework information is selected from a plurality of pieces of first framework information.

S206: third indication information is sent to a terminal device. The third indication information is used to indicate the selected first framework information to the terminal device.

The third indication information may be used to indicate the selected first framework information to the terminal device.

S306: a first AI model is generated based on the selected first framework information.

S406: the first AI model is sent to the terminal device.

In this embodiment of the present disclosure, the first framework information is selected from the plurality of pieces of first framework information, the third indication information is sent to the terminal device to indicate the selected first framework information to the terminal device, the first AI model is generated based on the selected first framework information, and the first AI model is sent to the terminal device. In this way, it is able to accurately indicate a selection procedure of the selected first framework information based on the third indication information, so as to ensure the reliability of the generated first AI model.

The present disclosure further provides in some embodiments a model interaction method for a heterogeneous AI framework. The selecting the first framework information from the plurality of pieces of first framework information further includes: determining a first candidate of a plurality of candidates for framework information supported by the network device; and selecting the first framework information from the plurality of pieces of first framework information based on the first candidate. The selected first framework information includes the selected first AI model framework, and the selected first framework information includes any one of: the first framework information which is the same as the first candidate; or the first framework information which is different from the first candidate. A first candidate framework to which the first candidate belongs supports to convert a model into a model supported by the selected first framework information. In this way, it is able to improve the practicability of the selected first framework information.

FIG. 7 is a flowchart of another model interaction method for a heterogeneous AI framework according to an embodiment of the present disclosure, and this method is applied to a network device. As shown in FIG. 7, the method includes, but is not limited to, the following steps.

S107: a first AI model is converted into a fourth AI model based on a selected first model framework. A second model framework determined based on selected first framework information supports a model conversion, and the first AI model is generated by the network device based on the second model framework.

The fourth AI model is an AI model obtained by performing a conversion processing on the first AI model based on the selected first model framework.

It should be appreciated that, a matching level between the first AI model and a terminal device may be low, and in a case that the conversion processing is performed on the first AI mode based on the selected first model framework, it is able improve the adaptability between the fourth AI mode and the terminal device to a great extent.

S207: the fourth AI model is sent to the terminal device.

In other words, in an embodiment of the present disclosure, if the first AI model is not applicable to the terminal device, the conversion processing may be performed on the first AI model based on the selected first model framework in a case that the second model framework supports a model conversion function to obtain the fourth AI model applicable to the terminal device, and then the fourth AI model is sent to the terminal device, so as to complete the model interaction between the network device and the terminal device.

In this embodiment of the present disclosure, the first AI model is converted into the fourth AI model based on the selected first model framework, the second model framework determined by the selected first framework information supports the model conversion, the first AI model is generated by the network device based on the second model framework, and the fourth AI model is sent to the terminal device. In this way, it is able to perform the conversion between different AI models based on the selected first model framework, so as to improve the model interaction and matching efficiency between the network device and the terminal device.

The present disclosure further provides in some embodiments a model interaction method for a heterogeneous AI framework, and the sending the first AI model to the terminal device based on the first determination result and/or the second determination result includes: determining a model issuing mode, in which the first determination result indicates that the network device supports the intermediate model representation framework, and the second determination result indicates that the network device supports the model conversion; and sending the first AI model to the terminal device based on the model issuing mode. In this way, in a case that the network device meets a plurality of model issuing modes, it is able to accurately indicate a matched AI model issuing mode, so as to ensure the reliability of an AI model issuing procedure.

For example, the network device may support the following several processing logics.

In a first logic, in a case that a first candidate of a plurality of candidates for framework information supported by the network device is the same as framework information indicating that the terminal device supports the model deployment, a message for indicating the terminal device to generate and report a model is sent to the terminal device, and this message is called as second indication information.

In other words, the second indication information indicates the terminal device to generate and report the model.

In a second logic, in a case that the plurality of candidates for framework information supported by the network device is different from the framework information indicating that the terminal device supports the model deployment and the network device supports the model conversion, the second indication information is sent to the terminal device. The second indication information indicates the terminal device to generate and report the model.

In a third logic, in a case that the plurality of candidates for framework information supported by the network device is different from the framework information indicating that the terminal device supports the model deployment and the network device does not support the model conversion, the second indication information is sent to the terminal device. The second indication information indicates a cell to which the network device belongs does not support an AI model inference based on the first framework information.

In a fourth logic, in a case that the first candidate of the plurality of candidates for framework information supported by the network device is the same as the framework information indicating that the terminal device supports the model conversion, a message for indicating the terminal device to convert and report a model to the terminal device, and this message may also be indicated by the second indication information.

In other words, the indicating the terminal device to report the model with the second indication information includes: indicating the terminal device to generate and report the model, or indicating the terminal device to convert the model and report the model obtained by conversion, which will not be particularly defined herein.

In a fifth logic, in a case that the plurality of candidates for framework information supported by the network device is different from the framework information indicating that the terminal device supports the model conversion and the network device does not support the model conversion, the second indication information is sent to the terminal device.

In a sixth logic, in a case that the plurality of candidates for framework information supported by the network device is different from the framework information indicating that the terminal device supports the model conversion and the network device supports the model conversion, the second indication information is sent to the terminal device. The second indication information indicates the terminal device to generate and report the model.

In a seventh logic, in a case that there is a plurality of pieces of framework information indicating that the terminal device supports the model deployment, the second indication information is sent to the terminal device. The second indication information indicates the terminal device to select the framework information from the plurality of pieces of framework information indicating that the terminal device supports the model deployment.

In response to an indication from the network device, the terminal device directly selects the framework information from the plurality of pieces of framework information to generate the model, which will not be particularly defined herein.

The network device may select the framework information from the plurality of pieces of framework information on its own initiative and indicate it to the terminal device, or the network device may also select the framework information from the plurality of pieces of framework information based on a predefined rule and indicate it to the terminal device, which will not be particularly defined herein.

In an eighth logic, in a case that there is a plurality of pieces of framework information indicating that the terminal device supports the model conversion, the second indication information is sent to the terminal device. The second indication information may further indicate the terminal device to select the framework information from the plurality of pieces of framework information indicating that the terminal device supports the model conversion.

In response to an indication from the network device, the terminal device directly selects the framework information from the plurality of pieces of framework information to convert the model, which will not be particularly defined herein.

The network device may select the framework information from the plurality of pieces of framework information indicating that the terminal device supports the model conversion on its own initiative and indicate it to the terminal device, or the network device may also select the framework information from the plurality of pieces of framework information based on a predefined rule and indicate it to the terminal device, which will not be particularly defined herein.

In a ninth logic, in a case that the plurality of candidates for framework information supported by the network device is different from the framework information indicating that the terminal device supports the model conversion, the second indication information is sent to the terminal device. The second indication information indicates that the cell to which the network device belongs does not support the AI model inference based on the first framework information.

The model issuing mode refers to a mode of sending the AI model from the network device to the terminal device. For example, the model is issued based on an intermediate model representation framework, or based on a model conversion mode.

In a case that the network device supports both the intermediate model representation framework and the model conversion, the network device may determine, on its own initiative, whether to perform the AI model interaction and deployment based on the intermediate model representation framework or based on the model conversion. Of course, the base station may also determine whether to use the intermediate model representation framework or perform the AI model conversion based on a predefined rule, or use any other possible mode, which will not be particularly defined herein. Of course, in a possible mode, the base station indicates a finally-determined model issuing mode to the terminal device.

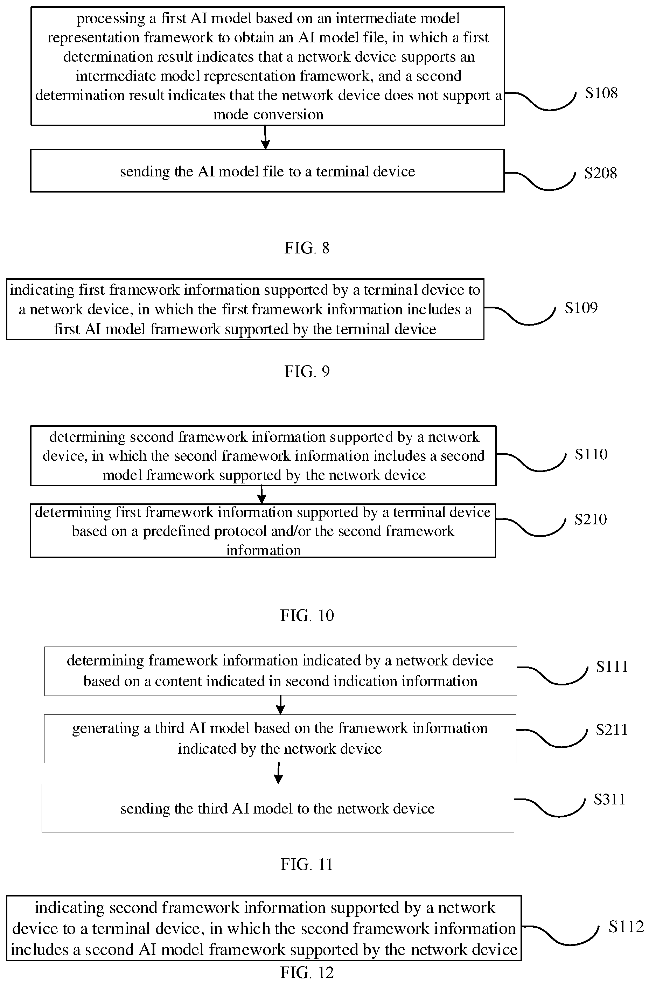

FIG. 8 is a flowchart of another model interaction method for a heterogeneous AI framework, and this method is applied to a network device. As shown in FIG. 8, the method includes, but is not limited to, the following steps.

S108: a first AI model is processed based on an intermediate model representation framework to obtain an AI model file. A first determination result indicates that the network device supports the intermediate model representation framework, and a second determination result indicates that the network device does not support the model conversion.

The AI model file refers to a file obtained by processing the first AI model using the intermediate model representation framework. There exist a plurality of possible formats of the AI model file.

S208: the AI model file is sent to the terminal device.

In other words, in this embodiment of the present disclosure, in a case that the network device supports the intermediate model representation framework and the second determination result indicates that the network device does not support the model conversion, the first AI model is processed in time based on the intermediate model representation framework to obtain the AI model file, and the AI model file is sent to the terminal device.

In this embodiment of the present disclosure, the first AI model is processed based on the intermediate model representation framework to obtain the AI model file, the first determination result indicates that the network device supports the intermediate model representation framework, the second determination result indicates that the network device does not support the model conversion, and the AI model file is sent to the terminal device. In this way, in a case that the network device supports the intermediate model representation framework but does not support the model conversion, it is able to convert the first AI model, so as to ensure the adaptability between the AI model file and the terminal device.

The present disclosure further provides in some embodiments a model interaction method for a heterogeneous AI framework, which further includes: sending second indication information to the terminal device. The second indication information indicates an AI model storage format of the AI model file, and the AI model file does not carry model format information.

The model format information refers to a storage format corresponding to the AI model file.

The steps executed by the network device will be described illustratively hereinafter.
1. The network device (e.g., a base station) may support one or more AI frameworks. In a case that the base station supports a plurality of AI frameworks, or in a case that the network device supports only one AI framework but supports a direct model conversion, e.g., TF->caffe or TF->NCNN, the base station may select a matched framework to generate the AI model, convert the model into an appropriate model and issue it to the terminal device. In a case that the base station supports only one framework and does not support the model conversion, the base station indicates the terminal device that the enabling of the model inference is not supported by the cell.

The network device may determine the first framework information supported by the terminal device, and the first framework information includes the first AI model framework supported by the terminal device, and the network device determines the second AI model framework.

The first framework information includes any one of framework information indicating that the terminal device supports the model deployment, or framework information indicating that the terminal device supports the model conversion.

The network device may receive the first indication information sent by the terminal device, and the first indication information is used to indicate the first framework information supported by the terminal device.

The network device may determine the plurality of candidates for framework information supported by the network device, and determines the second AI model framework based on the first framework information and the plurality of candidates for framework information.

The network device may take a candidate framework to which the first candidate of the plurality of candidates for framework information belongs as the second AI model framework. The first candidate is the same as the first framework information; or the candidate framework to which the first candidate belongs supports the model conversion.

The network device may generate the first AI model based on the second AI model framework; and send the first AI model to the terminal device, in which a first candidate of a plurality of candidates for framework information supported by the network device is the same as the first framework information; or convert the first AI model into the second AI model based on the first framework information, and send the second AI model to the terminal device, in which a first candidate framework supports the model conversion, and the first AI model is generated based on the first candidate framework; or convert the first AI model into the second AI model based on the intermediate model representation framework; and send the second AI model to the terminal device, in which the terminal device and the network device both support the intermediate model representation framework; or may not send the first AI model to the terminal device, in which the network device does not support the intermediate model representation framework, and the network device does not support the model conversion.

The network device may send the second indication information to the terminal device, the second indication information is used to indicate that a cell to which the network device belongs does not support the AI model deployment based on the first framework information, and the network device meets at least one of: that a first candidate framework supported by the network device does not support the model conversion; that the network device does not support the model conversion; or that the network device does not support an intermediate model representation framework.

The network device may send the second indication information to the terminal device, the second indication information is used to indicate the terminal device to report a model to the network device, and the network device meets one of: that the first candidate of the plurality of candidates for framework information supported by the network device is the same as the first framework information; or that the network device supports the model conversion.

The network device may send the second indication information to the terminal device, and the second indication information is used to indicate the terminal device to select the first framework information from the plurality of pieces of first framework information.

The network device may determine the second framework information corresponding to the first framework information based on a predefined protocol, and take a model framework to which the second framework information belongs as the second model framework.

The predefined protocol includes any of: defining that the network device uses same framework information as the terminal device, or defining that the network device uses framework information matching framework information used by the terminal device, or defining framework information corresponding to a model processing phase, or defining that the model is processed based on the intermediate model representation framework.

For example, the predefined protocol may specifically speculate available AI framework types.

Scheme 1: the predefined protocol speculates that the network device and the terminal device use the same AI framework, e.g., caffe or caffe2.

Scheme 2: the network device and the terminal device use different AI frameworks.

Scheme 2-1: the predefined protocol speculates that the network device and the terminal device use predefined AI frameworks matching each other. For example, the network device uses pytorch and the terminal device uses NCNN; or pytorch is used in a model training procedure, NCNN is used in a model inference procedure, and in a case that the model training is completed and the model deployment is performed, the predefined protocol speculates that pytorch is supported to be converted into NCNN.

Scheme 2-2: a model translation is performed with an intermediate model representation framework. For example, the predefined protocol speculates that an ONNX is used or an AI model representation framework standardized by other institutions, e.g., IEEE, is used.

The first framework information is the same as the second framework information, or the first framework information is different from the second framework information, or the first framework information is different from the second framework information and the second framework information is determined based on a model processing phase.

The model processing phase includes any of a model training phase or a model inference and deployment phase.

2. In a case that the terminal device has reported a plurality of supported AI frameworks, the base station determines one AI framework or a matched AI framework and indicates it to the terminal device, so as to enable the AI framework. In addition, the base station needs to convert the AI model into one of a plurality of matched AI frameworks.

The network device may send the second indication information to the terminal device, and the second indication information is used to indicate the terminal device to select the first framework information from the plurality of pieces of first framework information.

The network device may determine whether or not the network device supports the intermediate model representation framework to obtain the first determination result, determine whether or not the network device supports the model conversion to obtain the second determination result, and send the first AI model to the terminal device based on the first determination result and/or the second determination result.

The network device may convert the first AI model into the third AI model based on the selected first model framework in a case that the second model framework determined based on the selected first framework information supports the model conversion, and send the third AI model to the terminal device. The first AI model is generated by the network device based on the second model framework.

The network device may generate the first AI model based on the selected first framework information, and send the first AI model to the terminal device.

The network device may receive the third AI model sent by the terminal device, the third AI model is generated by the terminal device based on the content indicated by the network device, and the content indicated by the network device at least includes a content indicated in the second indication information.

The network device may select the first framework information from the plurality of pieces of first framework information, send the third indication information to the terminal device, generate the first AI model based on the selected first framework information, and send the first AI model to the terminal device. The third indication information is used to indicate the selected first framework information to the terminal device.

The network device determines the first candidate of the plurality of candidates for framework information supported by the network device, and selects the first framework information from the plurality of pieces of first framework information based on the first candidate. The selected first framework information includes the selected first model framework, and the selected first framework information includes any one of the first framework information which is the same as the first candidate or the first framework information which is different from the first candidate, and a first candidate framework to which the first candidate belongs supports to convert a model into a model supported by the selected first framework information.

The network device converts the first AI model into the fourth AI model based on the selected first AI model framework, and sends the fourth AI model to the terminal device. The second AI model framework determined based on the selected first framework information supports the model conversion, and the first AI model is generated by the network device based on the second AI model framework.

For example, the network device supports the following several processing logics.

In a first logic, in a case that the first candidate of the plurality of candidates for framework information supported by the network device is the same as framework information indicating that the terminal device supports the model deployment, a message for indicating the terminal device to generate and report a model is sent to the terminal device, and this message is called as second indication information.

In other words, the second indication information indicates the terminal device to generate and report the model.

In a second logic, in a case that the plurality of candidates for framework information supported by the network device is different from the framework information indicating that the terminal device supports the model deployment and the network device supports the model conversion, the second indication information is sent to the terminal device. The second indication information indicates the terminal device to generate and report the model.

In a third logic, in a case that the plurality of candidates for framework information supported by the network device is different from the framework information indicating that the terminal device supports the model deployment and the network device does not support the model conversion, the second indication information is sent to the terminal device. The second indication information indicates a cell to which the network device belongs does not support an AI model inference based on the first framework information.

In a fourth logic, in a case that the first candidate of the plurality of candidates for framework information supported by the network device is the same as the framework information indicating that the terminal device supports the model conversion, a message for indicating the terminal device to convert and report a model to the terminal device, and this message may also be indicated by the second indication information.

In other words, the indicating the terminal device to report the model via the second indication information includes: indicating the terminal device to generate and report the model, or indicating the terminal device to convert the model and report the model obtained by conversion, which will not be particularly defined herein.

In a fifth logic, in a case that the plurality of candidates for framework information supported by the network device is different from the framework information indicating that the terminal device supports the model conversion and the network device does not support the model conversion, the second indication information is sent to the terminal device.

In a sixth logic, in a case that the plurality of candidates for framework information supported by the network device is different from the framework information indicating that the terminal device supports the model conversion and the network device supports the model conversion, the second indication information is sent to the terminal device. The second indication information indicates the terminal device to generate and report the model.

In a seventh logic, in a case that there is a plurality of pieces of framework information indicating that the terminal device supports the model deployment, the third indication information is sent to the terminal device. The third indication information indicates the terminal device to select the framework information from the plurality of pieces of framework information indicating that the terminal device supports the model deployment.

In response to an indication from the network device, the terminal device directly selects the framework information from the plurality of pieces of framework information to generate the model, which will not be particularly defined herein.

The network device may select the framework information from the plurality of pieces of framework information on its own initiative and indicate it to the terminal device, or the network device may also select the framework information from the plurality of pieces of framework information based on a predefined rule and indicate it to the terminal device, which will not be particularly defined herein.

In an eighth logic, in a case that there is a plurality of pieces of framework information indicating that the terminal device supports the model conversion, the second indication information is sent to the terminal device. The second indication information may further indicate the terminal device to select the framework information from the plurality of pieces of framework information indicating that the terminal device supports the model conversion.

In response to an indication from the network device, the terminal device directly selects the framework information from the plurality of pieces of framework information to convert the model, which will not be particularly defined herein.

The network device may select the framework information from the plurality of pieces of framework information indicating that the terminal device supports the model conversion on its own initiative and indicate it to the terminal device, or the network device may also select the framework information from the plurality of pieces of framework information based on a predefined rule and indicate it to the terminal device, which will not be particularly defined herein.

In a ninth logic, in a case that the plurality of candidates for framework information supported by the network device is different from the framework information indicating that the terminal device supports the model conversion, the second indication information is sent to the terminal device.

The network device receives the third AI model sent by the terminal device, the third AI model is generated by the terminal device based on a content indicated by the network device, and the content indicated by the network device at least includes a content indicated in the second indication information.

The network device issues the second indication information to the terminal device in a case that the plurality of candidates for framework information supported by the network device is different from the framework information indicating that the terminal device supports the model conversion and the network device or the terminal device does not support the intermediate model representation framework, and the second indication information indicates that the cell to which the network device belongs does not support the AI model inference based on the first framework information.

3. In a case that the base station supports both the AI model conversion and the intermediate model representation framework, the base station further needs to indicate a mode specially used for issuing the model to the terminal device. In addition, in a case that the base station does not support the model conversion but supports the intermediate model representation framework, the base station converts the model into a model format supported by the intermediate model representation framework and issues it to the terminal device. In a case that the model file does not carries any model format information, a corresponding AI model storage format needs to be indicated. In a case that the base station does not support the model conversion and the intermediate model representation framework, the base station issues an indication indicating that the cell does not support to enable the AI model inference, or the base station does not issue the AI model as an implicit indication.

The network device determines the model issuing mode, and sends the first AI model to the terminal device based on the model issuing mode. The first determination result indicates that the network device supports the intermediate model representation framework, and the second determination result indicates that the network device supports the model conversion.

The network device processes the first AI model based on the intermediate model representation framework to obtain an AI model file, and sends the AI model file to the terminal device. The first determination result indicates that the network device supports the intermediate model representation framework, and the second determination result indicates that the network device does not support the model conversion.

The network device sends the second indication information to the terminal device, the second indication information indicates an AI model storage format of the AI model file, and the AI model file does not carry model format information.

The network device determines whether or not the network device supports the intermediate model representation framework to obtain the first determination result, determines whether or not the network device supports the model conversion to obtain the second determination result, and sends the first AI model to the terminal device based on the first determination result and/or the second determination result.

The network device determines the model issuing mode in a case that the first determination result indicates that the network device supports the intermediate model representation framework and the second determination result indicates that the network device supports the model conversion, and sends the first AI model to the terminal device based on the model issuing mode.

The network device processes the first AI model based on the intermediate model representation framework to obtain the AI model file in a case that the first determination result indicates that the network device supports the intermediate model representation framework and the second determination result indicates that the network device does not support the model conversion, and sends the AI model file to the terminal device.

The network device sends the second indication information to the terminal device in a case that the AI model file does not carry any model format information, and the second indication information indicates the AI model storage format of the AI model file.

The network device does not sent the first AI model to the terminal device in a case that the first determination result indicates that the network device does not support the intermediate model representation framework and the second determination result indicates that the network device does not support the model conversion.

The network device sends the second indication information to the terminal device in a case that the first determination result indicates that the network device does not support the intermediate model representation framework and the second determination result indicates that the network device does not support the model conversion. The second indication information indicates that the cell to which the network device belongs does not support the AI model inference based on the first framework information.

The network device converts the first AI model into a fifth AI model based on the intermediate model representation framework in a case that the terminal device supports the intermediate model representation framework, and sends the fifth AI model to the terminal device.

The network deice determines that the network device supports the intermediate model representation framework in a case that the terminal device supports the intermediate model representation framework.

FIG. 9 is a flowchart of another model interaction method for a heterogeneous AI framework, and this method is applied to a terminal device. As shown in FIG. 9, the method includes, but is not limited to, the following step.

S109: first framework information supported by the terminal device is indicated to a network device. The first framework information includes a first AI mode framework supported by the terminal device.

In other words, in this embodiment of the present disclosure, the terminal device sends the first framework information to the network device, so as to indicate the first framework information supported by the terminal device to the network device.

The present disclosure further provides in some embodiments a model interaction method for a heterogeneous AI framework, and the first framework information supported by the terminal device is determined based on a predefined protocol.

The present disclosure further provides in some embodiments a model interaction method for a heterogeneous AI framework, and the predefined protocol includes any one of: defining that the terminal device uses same framework information as the network device, or defining that the terminal device uses framework information matching framework information used by the network device, or defining framework information corresponding to a model processing phase, or defining that the model is processed based on the intermediate model representation framework.

The present disclosure further provides in some embodiments a model interaction method for a heterogeneous AI framework, and in a case that the first framework information supported by the terminal device is determined based on the predefined protocol and/or second framework information, the second framework information supported by the network device may be taken as the first framework information.

The present disclosure further provides in some embodiments a model interaction method for a heterogeneous AI framework, and in a case that the first framework information supported by the terminal device is determined based on the predefined protocol and/or the second framework information, the framework information matching the second framework information may also be taken as the first framework information.

The present disclosure further provides in some embodiments a model interaction method for a heterogeneous AI framework, and in a case that the first framework information supported by the terminal device is determined based on the predefined protocol and/or the second framework information, the framework information corresponding to the model processing phase of the terminal device may also be taken as the first framework information.

In this embodiment of the present disclosure, the first framework information supported by the terminal device is indicated to the network device, and the first framework information includes the first AI model framework supported by the terminal device. In this way, it is able to ensure the adaptability between the AI model generated by the network device and the terminal device.

The present disclosure further provides in some embodiments a model interaction method for a heterogeneous AI framework, and the first framework information includes any one of framework information indicating that the terminal device supports a model deployment, and framework information indicating the terminal device supports a model conversion.

The present disclosure further provides in some embodiments a model interaction method for a heterogeneous AI framework, which further includes sending first indication information to the network device. The first indication information is used to indicate the first framework information supported by the terminal device, and the terminal device indicates the first framework information supported by the terminal device to the network device based on the first indication information.

FIG. 10 is a flowchart of another model interaction method for a heterogeneous AI framework, and this method is applied to a terminal device. As shown in FIG. 10, the method includes, but is not limited to, the following steps.

S110: second framework information supported by a network device is determined. The second framework information includes a second model framework supported by the network device.

The present disclosure further provides in some embodiments a model interaction method for a heterogeneous AI framework. First framework information is the same as the second framework information, or the first framework information is different from the second framework information, or the first framework information is different from the second framework information and the second framework information is determined based on a model processing phase. In this way, the interaction procedure is adapted to a personalized application scenario, so as to expand a scope of application of the model interaction method.

The present disclosure further provides in some embodiments a model interaction method for a heterogeneous AI framework, and the model processing phase includes any one of a model training phase or a model inference and deployment phase.

S210: the first framework information supported by the terminal device is determined based on a predefined protocol and/or the second framework information.

In this embodiment of the present disclosure, the second framework information supported by the network device is determined, the second framework information includes the second model framework supported by the network device, and the first framework information supported by the terminal device is determined based on the predefined protocol and/or the second framework information. In this way, it is able to improve the flexibility of a determination procedure of the first framework information.

The present disclosure further provides in some embodiments a model interaction method for a heterogeneous AI framework, which further includes receiving a first AI model sent by the network device, in which the first AI model is generated by the network device; or receiving a second AI model sent by the network device, in which the first AI model is generated by the network device, and the second AI model is obtained by converting, by the network device, the first AI model based on the first framework information or the intermediate model representation framework. In this way, it is able to improve the adaptability of the AI model received by the terminal device.

The present disclosure further provides in some embodiments a model interaction method for a heterogeneous AI framework, which further includes receiving second indication information sent by the network device. The second indication information is used to indicate that a cell to which the network device belongs does not support an AI model deployment based on the first framework information. In this way, it is able for the terminal device to obtain, based on the second indication information, relevant information indicating that the cell to which the network device belongs does not support the AI model inference based on the first framework information in time.

The present disclosure further provides in some embodiments a model interaction method for a heterogeneous AI framework, which further includes receiving second indication information sent by the network device. The second indication information is used to indicate the terminal device to report a model to the network device. The terminal device meets one of: that the first framework information supported by the terminal device is the same as a first candidate of a plurality of candidates for framework information supported by the network device; or that the first framework information supported by the terminal device is different from the plurality of candidates for framework information supported by the network device. In this way, it is able to accurately indicate a model report procedure of the terminal device based on the second indication information.

For example, in a case that the first candidate is the same as the first framework information, a framework type indicated by the first candidate is the same as a framework type indicated by the first framework information, or a framework type and a version number indicated by the first candidate are the same as a framework type and a version number indicated by the first framework information, or a framework type indicated by the first candidate is different from a framework type indicated by the first framework information but the model conversion is supported based on the intermediate model representation framework, which will not be particularly defined herein.

For example, in a case that the plurality of candidates for framework information is different from the first framework information, a framework type indicated by the plurality of candidates for framework information is different from a framework type indicated by the first framework information, or a framework type and a version number indicated by the plurality of candidates for framework information are different from a framework type and a version number indicated by the first framework information, or a framework type indicated by the plurality of candidates for framework information is different from a framework type indicated by the first framework information but the model conversion is not supported based on the intermediate model representation framework, which will not be particularly defined herein.

Hence, in the embodiments of the present disclosure, in an interaction procedure, it is able to accurately, flexibly determine the second model framework corresponding to the first framework information based on whether or not the plurality of candidates for framework information is the same as the first framework information.

The present disclosure further provides in some embodiments a model interaction method for a heterogeneous AI framework, which further includes receiving second indication information sent by the network device. The second indication information is used to indicate the terminal device to select the first framework information from a plurality of pieces of first framework information, and the terminal device supports the plurality of pieces of first framework information. In this way, it is able to accurately indicate a selection procedure of the first framework information for the terminal device based on the second indication information.

FIG. 11 is a flowchart of another model interaction method for a heterogeneous AI framework according to an embodiment of the present disclosure, and thus method is applied to a terminal device. As shown in FIG. 11, the method includes, but is not limited to, the following steps.

S111: framework information indicated by a network device is determined based on a content indicted in second indication information.

S211: a third AI model is generated based on the framework information indicated by the network device.

The third AI model is an AI model generated by the terminal device based on the framework information indicated by the network device.

S311: the third AI model is sent to the network device.

In this embodiment of the present disclosure, the framework information indicated by the network device is determined based on the content indicated in the second indication information, the third AI model is generated based on the framework information indicated by the network device, and then the third AI model is sent to the network device. In this way, it is able to improve the adaptability between the third AI model and the network device.

The present disclosure further provides in some embodiments a model interaction method for a heterogeneous AI framework, which further includes receiving a fourth AI model sent by the network device.

The fourth AI model is an AI model generated by the network device.

The present disclosure further provides in some embodiments a model interaction method for a heterogeneous AI framework, which further includes receiving an AI model file sent by the network device. The AI model file is obtained by processing, by the network device, the first AI model based on the intermediate model representation framework, the first AI model is generated by the network device based on the second model framework, and the second model framework is determined based on the first framework information. In this way, it is able to transmit the first AI model in a cross-framework manner based on the intermediate model representation framework.

The present disclosure further provides in some embodiments a model interaction method for a heterogeneous AI framework, which further includes receiving second indication information sent by the network device. The second indication information indicates an AI model storage format of the AI model file, and the AI model file does not carry any model format information. In this way, it is able for the terminal device to accurately obtain the AI model storage format of the AI model file based on the second indication information, thereby to prevent a storage effect of the AI model file from being adversely affected in a case of an unknown storage format.

The steps executed by the terminal device will be described illustratively hereinafter.
1. The terminal device reports one or more AI frameworks supported by the terminal device to the base station.

The terminal device indicate the first framework information supported by the terminal device to the network device, and the first framework information includes the first AI model framework supported by the terminal device.

The first framework information includes any one of framework information indicating that the terminal device supports the model deployment, or framework information indicating that the terminal device supports the model conversion.

The terminal device sends the first indication information to the network device, and the first indication information is used to indicate the first framework information supported by the terminal device.

The terminal device receives the first AI model sent by the network device, and the first AI model is generated by the network device.

The terminal device receives the second AI model sent by the network device, the second AI model is obtained by converting, by the network device, the first AI model based on the first framework information, and the first AI model is generated by the network device.

The terminal device receives the second indication information sent by the network device, and the second indication information indicates that the cell to which the network device belongs does not support the AI model inference based on the first framework information.

The terminal device sends the first indication information to the network device, and the first indication information is used to indicate the first framework information supported by the terminal device.

The terminal device determines the second framework information supported by the network device, and determines the first framework information supported by the terminal device based on the predefined protocol and/or the second framework information. The second framework information includes the second model framework supported by the network device.

The terminal device receives the first AI model sent by the network device, and the first AI model is generated by the network device; or the terminal device receives the second AI model sent by the network device, the second AI model is obtained by converting, by the network device, the first AI model based on the first framework information or the intermediate model representation framework, and the first AI model is generated by the network device.

The terminal device receives the second indication information sent by the network device, and the second indication information is used to indicate that the cell to which the network device belongs does not support the AI model deployment based on the first framework information.

The terminal device receives the second indication information sent by the network device, the second indication information is used to indicate the terminal device to report a model to the network device, and the terminal device meets one of: that the first framework information supported by the terminal device is the same as the first candidate of the plurality of candidates for framework information supported by the network device, or that the first framework information supported by the terminal device is different from the plurality of candidates for framework information supported by the network device.

The terminal receives the second indication information sent by the network device, the second indication information is used to indicate the terminal device to select the first framework information from the plurality of pieces of first framework information, and the terminal device supports the plurality of pieces of first framework information.

The terminal device determines the framework information indicated by the network device based on the content indicated in the second indication information, generates the third AI model based on the framework information indicated by the network device, and sends the third AI model to the network device.

The terminal device receives the fourth AI model sent by the network device.

2. The terminal device reports whether or not to support an intermediate model representation framework and reports the supported intermediate model representation framework(s).

The terminal device determines that the intermediate model representation framework is supported based on the predefined protocol.

The terminal device determines that the intermediate model representation framework is supported, and sends the second indication information to the network device. The second indication information indicates that the terminal device supports the intermediate model representation framework.

The terminal device receives the AI model file sent by the network device, the AI model file is obtained by the network device by processing the first AI model based on the intermediate model representation framework, the first AI model is generated by the network device based on the second model framework, and the second model framework is determined based on the first framework information.

3. The terminal device reports version information about the AI frameworks supported by the terminal device itself.

The terminal device receives the second indication information sent by the network device, the second indication information indicates the AI model storage format of the AI model file, and the AI model file does not carry any model format information.

The terminal device determines the second framework information supported by the network device, and determines the first framework information supported by the terminal device based on the predefined protocol and/or the second framework information.

The predefined protocol includes any one of: defining that the terminal device uses same framework information as the network device, or defining that the terminal device uses framework information matching framework information used by the network device, or defining framework information corresponding to a model processing phase, or defining that the model is processed based on the intermediate model representation framework.

For example, the predefined protocol specifically speculates available AI framework types.

Scheme 1: the predefined protocol speculates that the network device and the terminal device use the same AI framework, e.g., caffe or caffe2.

Scheme 2: the network device and the terminal device use different AI frameworks.

Scheme 2-1: the predefined protocol speculates that the network device and the terminal device use predefined AI frameworks matching each other. For example, the network device uses pytorch and the terminal device uses NCNN; or pytorch is used in a model training procedure, NCNN is used in a model inference procedure, and in a case that the model training is completed and the model deployment is performed, the predefined protocol speculates that pytorch is supported to be converted into NCNN.

Scheme 2-2: a model translation is performed with an intermediate model representation framework. For example, the predefined protocol speculates that an ONNX is used or an AI model representation framework standardized by other institutions, e.g., IEEE, is used.

The first framework information is the same as the second framework information, or the first framework information is different from the second framework information, or the first framework information is different from the second framework information and the second framework information is determined based on a model processing phase.

The terminal device takes the second framework information supported by the network device as the first framework information, or takes the framework information matching the second framework information as the first framework information, or takes the framework information corresponding to the model processing phase of the terminal device as the first framework information.

The model processing phase includes any one of a model training phase or a model inference and deployment phase.

The terminal device receives the AI model file sent by the network device, the AI mode file is obtained by the network device by processing the first AI model based on the intermediate model representation framework, the first AI model is generated by the network device based on the second model framework, and the second model framework is determined based on the first framework information.

FIG. 12 is a flowchart of another model interaction method for a heterogeneous AI framework according to an embodiment of the present disclosure, and this method is applied to a network device. As shown in FIG. 12, the method includes, but is not limited to, the following step.

S112: second framework information supported by the network device is indicated to a terminal device. The second framework information includes a second AI model framework supported by the network device.

In this embodiment of the present disclosure, the second framework information supported by the network device is indicated to the terminal device, and the second framework information includes the second AI model framework supported by the network device. In this way, it is able for the terminal device to accurately obtain the second framework information supported by the network device.

The present disclosure further provides in some embodiments a model interaction method for a heterogeneous AI framework, and the second framework information includes any one of framework information indicating that the network device supports a model deployment, or framework information indicating that the network device supports a model conversion.

The present disclosure further provides in some embodiments a model interaction method for a heterogeneous AI framework, which further includes: receiving a first AI model sent by the terminal device, in which the first AI model is generated by the terminal device based on a first model framework included in the first framework information supported by the terminal device, and the first framework information is determined based on the second framework information; or receiving first indication information sent by the terminal device, in which the first indication information indicates the first framework information and indicates that the first AI model does not carry any model format information; or sending second indication information to the terminal device, in which the second indication information indicates that the network device supports an intermediate model representation framework; or receiving a second AI model sent by the terminal device, in which the second AI model is generated by the terminal device.

The steps executed by the network device will be described illustratively hereinafter.
1. The network device indicates all AI framework supported by the network device to the terminal device.

The network device indicates the second framework information supported by the network device to the terminal device, and the second framework information includes the second AI model framework supported by the network device.

The second framework information includes any one of framework information indicating that the network device supports the model deployment, or framework information indicating that the network device supports the model conversion.

2. The base station performs the matching of the AI framework, and/or makes a decision about whether or not to issue a model, and/or make a decision about which AI framework is to be used. In addition, a group of AI framework conversion rules between the terminal device and the base station may be further predefined.

The network device receives the first indication information sent by the terminal device, and the first indication information indicates the first framework information and indicates that the first AI model does not carry any model format information.

The first framework information includes any one of framework information indicating that the terminal device supports the model deployment, or framework information indicating that the terminal device support the model conversion.

The framework may be determined based on the predefined protocol. For example, the predefined protocol specifically speculates available AI framework types.

Scheme 1: the predefined protocol speculates that the network device and the terminal device use the same AI framework, e.g., caffe or caffe2.

Scheme 2: the network device and the terminal device use different AI frameworks.

Scheme 2-1: the predefined protocol speculates that the network device and the terminal device use predefined AI frameworks matching each other. For example, the network device uses pytorch and the terminal device uses NCNN; or pytorch is used in a model training procedure, NCNN is used in a model inference procedure, and in a case that the model training is completed and the model deployment is performed, the predefined protocol speculates that pytorch is supported to be converted into NCNN.

Scheme 2-2: a model translation is performed with an intermediate model representation framework. For example, the predefined protocol speculates that an ONNX is used or an AI model representation framework standardized by other institutions, e.g., IEEE, is used.

The first framework information is the same as the second framework information, or the first framework information is different from the second framework information, or the first framework information is different from the second framework information and the second framework information is determined based on a model processing phase.

3. The model conversion is completed by the terminal device.

The network device receives the first AI model sent by the terminal device, the first AI model is generated by the terminal device based on the first model framework included in the first framework information supported by the terminal device, and the first framework information is determined based on the second framework information.

4. The network device indicates the intermediate model representation framework supported by the network device itself.

The network device sends the second indication information to the terminal device, and the second indication information indicates that the network device supports the intermediate model representation framework.

The network device receives the second AI model sent by the terminal device, and the second AI model is generated by the terminal device.

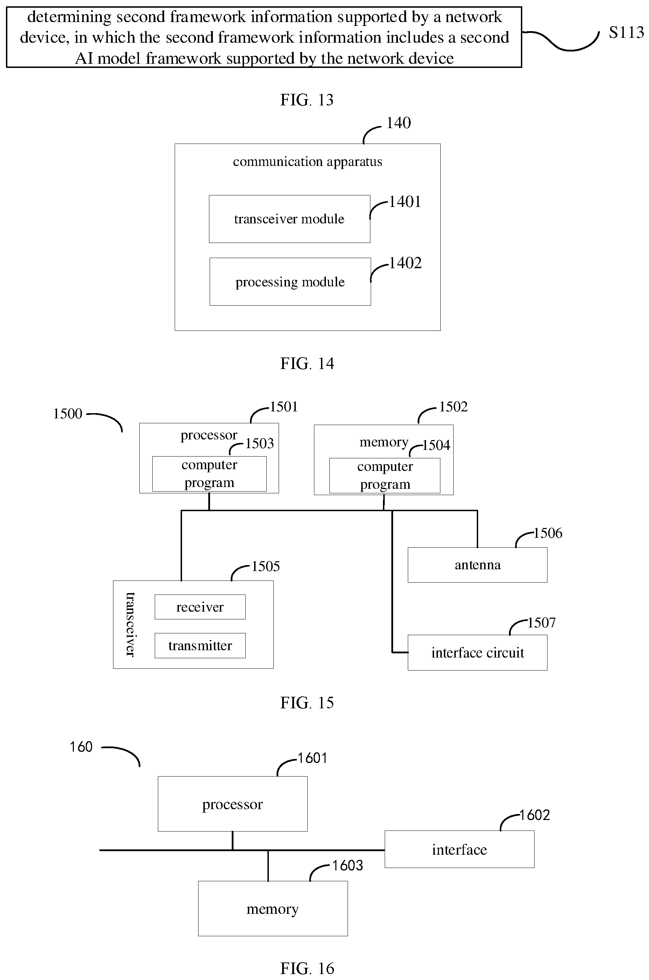

FIG. 13 is a flowchart of another model interaction method for a heterogeneous AI framework according to an embodiment of the present disclosure, and this method is applied to a terminal device. As shown in FIG. 13, the method includes, but is not limited to, the following step.

S113: second framework information supported by a network device is determined. The second framework information includes a second AI model framework supported by the network device.

In this embodiment of the present disclosure, the second framework information supported by the network device is determined, and the second framework information includes the second AI model framework supported by the network device. In this way, it is able to provide a reliable basis for the terminal device to determine the AI model framework used by the terminal device.

The present disclosure further provides in some embodiments a model interaction method for a heterogeneous AI framework according to an embodiment of the present disclosure, and the second framework information includes any one of framework information indicating that the network device supports a model deployment, or framework information indicating that the network device supports a model conversion.

The present disclosure further provides in some embodiments a model interaction method for a heterogeneous AI framework, which further includes: determining a first model framework corresponding to the second framework information, generating a first AI model based on the first model framework, and sending the first AI model to the network device; or sending first indication information to the network device, in which the first indication information indicates first framework information and indicates that the first AI model does not carry model format information; or receiving second indication information sent by the network device, in which the second indication information indicates that the network device supports an intermediate model representation framework; or determining whether or not the terminal device supports an intermediate model representation framework to obtain a third determination result, determining whether or not the terminal device supports a model conversion to obtain a fourth determination result, and sending a second AI model to the network device based on the third determination result and/or the fourth determination result, in which the network device supports an intermediate model representation framework, and the second AI model is generated by the terminal device.

The steps executed by the terminal device will be described illustratively hereinafter.
1. The terminal device reports the AI framework supported by the terminal device, or reports the AI framework of the base station which is supported by the terminal device to be converted.

The terminal device determines the first model framework corresponding to the second framework information, and generates the first AI model based on the first model framework.

The second framework information includes any one of framework information indicating that the network device supports the model deployment, or framework information indicating that the network device supports the model conversion.

2. The terminal device determines whether or not the model conversion between different AI frameworks can be completed on its own initiative. In a case that the model conversion can be completed, the terminal device sends the model after or before the conversion to the base station. Optionally, in a case that the transmitted model does not include any relevant information about a file format, the terminal device further needs to indicate the AI framework type corresponding to the model to the base station, so as to facilitate the parsing at the base station side.

The terminal device sends the first indication information to the network device, and the first indication information indicates the first framework information and indicates that the first AI model does not carry any model format information.

3. The model conversion may be completed at the terminal device side or the network device side.

The terminal device determines the first model framework corresponding to the second framework information, generates the first AI model based on the first model framework, and sends the first AI model to the network device.

The terminal device determines the first framework information corresponding to the second framework information based on the predefined protocol, and takes a model framework to which the first framework information belongs as the first model framework.

For example, the predefined protocol specifically speculates available AI framework types.

Scheme 1: the predefined protocol speculates that the network device and the terminal device use the same AI framework, e.g., caffe or caffe2.

Scheme 2: the network device and the terminal device use different AI frameworks.

Scheme 2-1: the predefined protocol speculates that the network device and the terminal device use predefined AI frameworks matching each other. For example, the network device uses pytorch and the terminal device uses NCNN; or pytorch is used in a model training procedure, NCNN is used in a model inference procedure, and in a case that the model training is completed and the model deployment is performed, the predefined protocol speculates that pytorch is supported to be converted into NCNN.

Scheme 2-2: a model translation is performed with an intermediate model representation framework. For example, the predefined protocol speculates that an ONNX is used or an AI model representation framework standardized by other institutions, e.g., IEEE, is used.

The first framework information is the same as the second framework information, or the first framework information is different from the second framework information, or the first framework information is different from the second framework information and the second framework information is determined based on a model processing phase.

4. The terminal device indicates the intermediate model representation framework supported by the terminal device itself.

The terminal device receives the second indication information sent by the network device, and the second indication information indicates that the network device supports the intermediate model representation framework.

The terminal device determines whether or not the terminal device supports the intermediate model representation framework to obtain the third determination result, determines whether or not the terminal device supports the model conversion to obtain the fourth determination result, and sends the second AI model to the network device based on the third determination result and/or the fourth determination result. The network device supports the intermediate model representation framework, and the second AI mode is generated by the terminal device.

The terminal device determines second candidate framework information supported by the terminal device, and determines the first model framework corresponding to the second framework information based on the second candidate framework information.

In a case that the second candidate framework information is the same as the second framework information, the terminal device takes a candidate framework to which the second candidate framework information belongs as the first model framework, and in a case that the second candidate framework information is different from the second framework information and the candidate framework supports the model conversion, the terminal device takes the candidate framework to which the second candidate framework information belongs as the first model framework.

The predefined protocol includes any one of: defining that the terminal device uses same framework information as the network device, or defining that the terminal device uses framework information matching framework information used by the network device, or defining framework information corresponding to a model processing phase, or defining that the model is processed based on the intermediate model representation framework.

The first framework information is the same as the second framework information, or the first framework information is different from the second framework information, or the first framework information is different from the second framework information and the second framework information is determined based on a model processing phase.

The model processing phase includes any of a model training phase or a model inference and deployment phase.

FIG. 14 is a block diagram of a communication apparatus according to an embodiment of the present disclosure, the communication apparatus 140 in FIG. 14 includes a transceiver module 1401 and a processing module 1402. The transceiver module 1401 includes a transmission module and/or a reception module, the transmission module is configured to achieve a transmission function, the reception module is configured to achieve a reception function, and the transceiver module 1401 is configured to achieve the transmission function and/or the reception function.

The communication apparatus 140 may be a terminal device (e.g., the terminal device in the above-mentioned method embodiments), or an apparatus in the terminal device, an apparatus capable of being used in combination with the terminal device. Alternatively, the communication apparatus 140 may be a network device (e.g., the terminal device in the above-mentioned method embodiments), an apparatus in the network device, or an apparatus capable of being used in combination with the network device.

In a case that the communication apparatus 140 is a network device, it includes: a transceiver module 1402 configured to determine first framework information supported by a terminal device, and determine a second AI model framework corresponding to the first framework information. The first framework information includes a first AI model framework supported by the terminal device.

Optionally, the first framework information further includes any one of: framework information indicating that the terminal device supports a model deployment; or framework information indicating that the terminal device supports a model conversion.

Optionally, the communication apparatus includes: a transceiver module 1401 configured to receive first indication information sent by the terminal device, and the first indication information is used to indicate the first framework information supported by the terminal device.

Optionally, the processing module 1402 is further configured to: determining a plurality of candidates for framework information supported by the network device; and determine the second AI model framework based on the first framework information and the plurality of candidates for framework information.

Optionally, the processing module 1402 is further configured to take a candidate framework to which a first candidate of the plurality of candidates for framework information belongs as the second AI model framework. The first candidate is the same as the first framework information; or the candidate framework to which the first candidate of the plurality of candidates for framework information belongs supports the model conversion.

Optionally, the processing module 1402 is further configured to generate a first AI model based on the second AI model framework.

Optionally, the processing module 1402 is further configured to send the first AI model to the terminal device, and a first candidate of a plurality of candidates for framework information supported by the network device is the same as the first framework information.

Optionally, the processing module 1402 is further configured to convert the first AI model into a second AI model based on the first framework information.

Optionally, the transceiver module 1401 is further configured to send the second AI model to the terminal device, a first candidate framework supports a model conversion, and the first AI model is generated based on the first candidate framework.

Optionally, the processing module 1402 is further configured to convert the first AI model into the second AI model based on an intermediate model representation framework.

Optionally, the transceiver module 1401 is further configured to send the second AI model to the terminal device, and both the terminal device and the network device support the intermediate model representation framework.

Optionally, the transceiver module 1401 is further configured to not send the first AI model to the terminal device, the network device does not support the intermediate model representation framework, and the network device does not support the model conversion.

Optionally, the transceiver module 1401 is further configured to send second indication information to the terminal device, the second indication information is used to indicate that a cell to which the network device belongs does not support an AI model deployment based on the first framework information, and the network device meets at least one of: that a first candidate framework supported by the network device does not support the model conversion; that the network device does not support the model conversion; or that the network device does not support an intermediate model representation framework.

Optionally, the transceiver module 1401 is further configured to send second indication information to the terminal device, the second indication information is used to indicate the terminal device to report a model to the network device, and the network device meets one of: that the first candidate of plurality of candidates for framework information supported by the network device is the same as the first framework information; or that the network device supports the model conversion.

Optionally, the transceiver module 1401 is further configured to send second indication information to the terminal device, and the second indication information is used to indicate the terminal device to select the first framework information from a plurality of pieces of first framework information.

Optionally, the processing module 1402 is further configured to: determine whether or not the network device supports an intermediate model representation framework, to obtain a first determination result; and determine whether or not the network device supports the model conversion, to obtain a second determination result.

Optionally, the transceiver module 1401 is further configured to send a first AI model to the terminal device based on the first determination result and/or the second determination result.

Optionally, the transceiver module 1401 is further configured to receive a third AI model sent by the terminal device, the third AI model is generated by the terminal device based on a content indicated by the network device, and the content indicated by the network device at least includes a content indicated in the second indication information.

Optionally, the processing module 1402 is further configured to select the first framework information from a plurality of pieces of first framework information.

Optionally, the transceiver module 1401 is further configured to send third indication information to the terminal device, and the third indication information is used to indicate the selected first framework information to the terminal device.

Optionally, the processing module 1402 is further configured to generate a first AI model based on the selected first framework information.

Optionally, the transceiver module 1401 is further configured to send the first AI model to the terminal device.

Optionally, the processing module 1402 is further configured to: determine a plurality of candidates for framework information supported by the network device; and select the first framework information from the plurality of pieces of first framework information based on the plurality of candidates for framework information. The selected first framework information includes the selected first AI model framework, the selected first framework information includes any one of: the first framework information which is the same as a first candidate of the plurality of candidates for framework information; or the first framework information which is different from the plurality of candidates for framework information, and a first candidate framework to which the plurality of candidates for framework information belongs supports to convert a model into a model supported by the selected first framework information.

Optionally, the processing module 1402 is further configured to convert the first AI model into a fourth AI model based on the selected first AI model framework, the second AI model framework determined based on the selected first framework information supports the model conversion, and the first AI model is generated by the network device based on the second AI model framework.

Optionally, the transceiver module 1401 is further configured to send the fourth AI model to the terminal device.

Optionally, the processing module 1402 is further configured to determine a model issuing mode, the first determination result indicates that the network device supports the intermediate model representation framework, and the second determination result indicates that the network device supports the model conversion.

Optionally, the transceiver module 1401 is further configured to send the first AI model to the terminal device based on the model issuing mode.

Optionally, the processing module 1402 is further configured to process the first AI model based on the intermediate model representation framework to obtain an AI model file, the first determination result indicates that the network device supports the intermediate model representation framework, and the second determination result indicates that the network device does not support the model conversion.

Optionally, the transceiver module 1401 is further configured to send the AI model file to the terminal device.

Optionally, the transceiver module 1401 is further configured to send second indication information to the terminal device, the second indication information indicates an AI model storage format of the AI model file, and the AI model file does not carry model format information.

By implementing the method in the embodiments of the present disclosure, the network device determines the first framework information supported by the terminal device and determines the second AI model framework, and the first framework information includes the first AI model framework supported by the terminal device. By implementing the method in the embodiments of the present disclosure, it is able to effectively prevent the AI model interaction from being adversely affected by the difference between the model frameworks of the network device and the terminal device, thereby to ensure the transmission accuracy of the AI model, and improve the interaction effect of the AI model.

In a case that the communication apparatus 140 is a terminal device, it includes a transceiver module 1401 configured to indicate first framework information supported by the terminal device to a network device. The first framework information includes a first AI model framework supported by the terminal device.

Optionally, the first framework information includes any one of: framework information indicating that the terminal device supports a model deployment; or framework information indicating that the terminal device supports a model conversion.

Optionally, the transceiver module 1401 is further configured to send first indication information to the network device, and the first indication information is used to indicate the first framework information supported by the terminal device.

Optionally, the communication apparatus further includes a processing module 1402 configured to: determine second framework information supported by the network device, in which the second framework information includes a second model framework supported by the network device; and determine the first framework information supported by the terminal device based on a predefined protocol and/or the second framework information.

Optionally, the transceiver module 1401 is further configured to: receive a first AI model sent by the network device, in which the first AI model is generated by the network device; or receive a second AI model sent by the network device, in which the second AI model is obtained by the network device by converting a first AI model based on the first framework information or based on an intermediate model representation framework, and the first AI model is generated by the network device.

Optionally, the transceiver module 1401 is further configured to receive second indication information sent by the network device, and the second indication information is used to indicate that a cell to which the network device belongs does not support an AI model deployment based on the first framework information.

Optionally, the transceiver module 1401 is further configured to receive second indication information sent by the network device, the second indication information is used to indicate the terminal device to report a model to the network device, and the terminal device meets one of: that the first framework information supported by the terminal device is the same as a first candidate of a plurality of candidates for framework information supported by the network device; or that the first framework information supported by the terminal device is different from the plurality of candidates for framework information supported by the network device.

Optionally, the transceiver module 1401 is further configured to receive second indication information sent by the network device, the second indication information is used to indicate the terminal device to select the first framework information from a plurality of pieces of first framework information, and the terminal device supports a plurality of pieces of first framework information.

Optionally, the processing module 1402 is further configured to: determine framework information indicated by the network device based on a content indicated in the second indication information; and generate a third AI model based on the framework information indicated by the network device.

Optionally, the transceiver module 1401 is further configured to send the third AI model to the network device.

Optionally, the transceiver module 1401 is further configured to receive a fourth AI model sent by the network device.

Optionally, the transceiver module 1401 is further configured to receive an AI model file sent by the network device, the AI model file is obtained by the network device by processing a first AI model based on an intermediate model representation framework, the first AI model is generated by the network device based on a second model framework, and the second model framework is determined based on the first framework information.

Optionally, the transceiver module 1401 is further configured to receive second indication information sent by the network device, the second indication information indicates an AI model storage format of the AI model file, and the AI model file does not carry model format information.

By implementing the method in the embodiments of the present disclosure, the terminal device indicates the first framework information supported by the terminal device to the network device, and the first framework information includes the first AI model framework supported by the terminal device. By implementing the method in the embodiments of the present disclosure, it is able to ensure the adaptability between the AI model generated by the network device and the terminal device.

In a case that the communication apparatus 140 is a network device, it includes a transceiver module 1401 configured to indicate second framework information supported by the network device to a terminal device, and the second framework information includes a second AI model framework supported by the network device.

Optionally, the second framework information includes any one of: framework information indicating that the network device supports a model deployment; or framework information indicating that the network device supports a model conversion.

Optionally, the transceiver module 1401 is further configured to: receive a first AI model sent by the terminal device, in which the first AI model is generated by the terminal device based on a first AI model framework included in first framework information supported by the terminal device, and the first framework information is determined based on the second framework information; or receive first indication information sent by the terminal device, in which the first indication information indicates first framework information and indicates that a first AI model does not carry model format information; or send second indication to the terminal device, in which the second indication information indicates that the network device supports an intermediate model representation framework; or receive a second AI model sent by the terminal device, in which the second AI model is generated by the terminal device.

By implementing the method in the embodiments of the present disclosure, the network device indicates the second framework information supported by the network device to the terminal device, and the second framework information includes the second AI model framework supported by the network device. By implementing the method in the embodiments of the present disclosure, it is able for the terminal device to accurately obtain the second framework information supported by the network device.

In a case that the communication apparatus 140 is a terminal device, it includes a processing module 1402 configured to determine second framework information supported by a network device, and the second framework information includes a second AI model framework supported by the network device.

Optionally, the second framework information includes any one of: framework information indicating that the network device supports a model deployment; or framework information indicating that the network device supports a model conversion.

Optionally, the processing module 1402 is further configured to determine a first model framework corresponding to the second framework information and generate a first AI model based on the first model framework.

Optionally, the transceiver module 1401 is further configured to send the first AI model to the network device.

Optionally, the transceiver module 1401 is further configured to send first indication information to the network device, and the first indication information indicates first framework information and indicates that the first AI model does not carry model format information.

Optionally, the transceiver module 1401 is further configured to receive second indication information sent by the network device, and the second indication information indicates that the network device supports an intermediate model representation framework.

Optionally, the processing module 1402 is further configured to determine whether or not the terminal device supports an intermediate model representation framework to obtain a third determination result, and determine whether or not the terminal device supports a model conversion to obtain a fourth determination result, and the network device supports an intermediate model representation framework.

Optionally, the transceiver module 1401 is further configured to send a second AI model to the network device based on the third determination result and/or the fourth determination result, and the second AI model is generated by the terminal device.

By implementing the method in the embodiments of the present disclosure, the terminal device determines the second framework information supported by the network device, and the second framework information includes the second AI model framework supported by the network device. By implementing the method in the embodiments of the present disclosure, it is able to provide a reliable basis for the terminal device to determine the AI model framework used by the terminal device.

FIG. 15 is a block diagram of another communication apparatus according to an embodiment of the present disclosure. The communication apparatus 150 may be a network device (e.g., the network device in the above method embodiments), a terminal device (e.g., the terminal device in the above method embodiments), or a chip, a chip system or a processor which supports the network device to implement the above-mentioned method, or a chip, a chip system or a processor which supports the terminal device to implement the above-mentioned method. The communication apparatus is used to implement the methods in the above-mentioned method embodiments, and the implementation may refer to that mentioned in the above-mentioned method embodiments.

The communication apparatus 150 may include one or more processors 1501. The processor 1501 may be a general-purpose processor or special-purpose processor, e.g., a baseband processor or a central processing unit. The baseband processor is configured to process a communication protocol as well as communication data, and the central processing unit is configured to control the communication apparatus (e.g., a network side device, a baseband chip, a terminal device, a terminal device chip, a Distributed Unit (DU) or a Centralized Unit (CU)), execute a computer program, and process data in the computer program.

Optionally, the communication apparatus 150 further includes one or more memories 1502 storing therein a computer program 1504. A computer program 1503 is stored in the processor 1501. The processor 1501 is configured to execute the computer program 1504 and/or the computer program 1503, so that the communication apparatus 150 implements the method in the above-mentioned method embodiments. Optionally, the memory 1502 further stores therein data. The communication apparatus 150 is arranged independent of, or integrated with, the memory 1502.

Optionally, the communication apparatus 150 further includes a transceiver 1505 and an antenna 1506. The transceiver 1505 is also called as a transceiver unit, a transceiver machine or a transceiver circuit, and it is configured to achieve a transmission function and a reception function. The transceiver 1505 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus 150 further includes one or more interface circuits 1507. The interface circuit 1507 is configured to receive code instructions and transmit them to the processor 1501. The processor 1501 executes the code instructions, so that the communication apparatus 150 implements the method in the above-mentioned method embodiments.

In an embodiment of the present disclosure, the processor 1501 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

In an embodiment of the present disclosure, the processor 1501 stores therein a computer program 1503, and the computer program 1503 is executed by the processor 1501, so that the communication apparatus 150 implements the method in the above-mentioned method embodiments. The computer program 1503 may be programmed in the processor 1501, and in this case, the processor 1501 may be implemented by hardware.

In an embodiment of the present disclosure, the communication apparatus 150 includes a circuit for implementing the transmission, reception or communication function in the above-mentioned method embodiments. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device (e.g., the network device in the above-mentioned method embodiments) or a terminal device (e.g., the terminal device in the above-mentioned method embodiments), but the scope of the communication apparatus is not limited thereto. In addition, a structure of the communication apparatus is limited to that in FIG. 15. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

In a case that the communication apparatus is a chip or a chip system, FIG. 16 is a block diagram of the chip according to an embodiment of the present disclosure. As shown in FIG. 16, the chip includes a processor 1601 and an interface 1602. There may exist one or more processors 1601, and more than one interface 1602.

In a case that the chip is used to achieve the function of the network device in the embodiments of the present disclosure, the processor 1601 is configured to implement S102 in FIG. 2, or implement S105 and S205 in FIG. 5, or implement S106 and S306 in FIG. 6, and the interface 1602 is configured to implement S103 in FIG. 3, or implement S104 in FIG. 4, or implement S206 and S406 in FIG. 6.

In a case that the chip is used to achieve the function of the terminal device in the embodiments of the present disclosure, the interface 1602 is configured to implement S109 in FIG. 9, or implement S311 in FIG. 11, and the processor 1601 is configured to implement S110 and S210 in FIG. 10, or implement S111 and S211 in FIG. 11.

Optionally, the chip further includes a memory 1603 for storing therein necessary computer programs and data.

It should be appreciated that, various illustrative logical blocks and steps listed in the embodiments of the present disclosure may be implemented by electronic hardware, computer software, or a combination thereof. Whether these functions are implemented by hardware or software depends on design requirements on an entire system and specific applications. For each specific application, various methods are used to achieve the function, which however shall not be construed as going beyond the scope of the present disclosure.

The present disclosure further provides in some embodiments a communication system, which includes the communication apparatus as a network device (e.g., the network device in the above-mentioned method embodiments) and the communication apparatus as a terminal device (e.g., the terminal device in the above-mentioned method embodiments) in FIG. 14, or includes the communication apparatus as a network device (e.g., the network device in the above-mentioned method embodiments) and the communication apparatus as a terminal device (e.g., the terminal device in the above-mentioned method embodiments) in FIG. 15.

The present disclosure further provides in some embodiments a readable storage medium storing therein a readable storage medium storing therein instructions. The instructions are executed by a computer to achieve the functions in any of the above method embodiments.

The present disclosure further provides in some embodiments a computer program product. The computer program product is executed by a computer to achieve the functions in any of the above method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of the same kind, the words "first", "second", "third", "A", "B", "C" and "D" are used to differentiate these technical features, without indicating any sequence or sizes thereof.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present disclosure may be understood as "defined", "defined in advance", "stored", "pre-stored", "pre-negotiated", "preconfigured", "programmed" or "pre-programed".

It should be appreciated that, units and algorithm steps for instances described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, apparatus and units described hereinabove may refer to the corresponding procedures in the method embodiments, and thus will not be particularly defined herein.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

## Claims

1. A model interaction method for a heterogeneous Artificial Intelligence (AI) framework, performed by a network device, comprising:
determining first framework information supported by a terminal device, wherein the first framework information comprises a first AI model framework supported by the terminal device; and
determining a second AI model framework.

2. The model interaction method according to claim 1, wherein the first framework information further comprises any one of:
framework information indicating that the terminal device supports a model deployment; or
framework information indicating that the terminal device supports a model conversion.

3. The model interaction method according to claim 1 or 2, further comprising:
receiving first indication information sent by the terminal device, wherein the first indication information is used to indicate the first framework information supported by the terminal device.

4. The model interaction method according to claim 2, wherein determining the second AI model framework comprises:
determining a plurality of candidates for framework information supported by the network device; and
determining the second AI model framework based on the first framework information and the plurality of candidates for framework information.

5. The model interaction method according to claim 4, wherein determining the second AI model framework based on the first framework information and the plurality of candidates for framework information comprises:
taking a candidate framework to which a first candidate of the plurality of candidates for framework information belongs as the second AI model framework;
wherein the first candidate is the same as the first framework information; or
the candidate framework to which the first candidate of the plurality of candidates for framework information belongs supports the model conversion.

6. The model interaction method according to claim 2, further comprising:
generating a first AI model based on the second AI model framework; and
sending the first AI model to the terminal device, wherein a first candidate of a plurality of candidates for framework information supported by the network device is the same as the first framework information; or
converting the first AI model into a second AI model based on the first framework information, and sending the second AI model to the terminal device, wherein a first candidate framework supports the model conversion, and the first AI model is generated based on the first candidate framework; or
converting the first AI model into a second AI model based on an intermediate model representation framework; and
sending the second AI model to the terminal device, wherein the terminal device and the network device both support the intermediate model representation framework; or
not sending the first AI model to the terminal device, wherein the network device does not support the intermediate model representation framework, and the network device does not support the model conversion.

7. The model interaction method according to claim 2, further comprising:
sending second indication information to the terminal device, wherein the second indication information is used to indicate that a cell to which the network device belongs does not support an AI model deployment based on the first framework information;
wherein the network device meets at least one of:
that a first candidate framework supported by the network device does not support the model conversion;
that the network device does not support the model conversion; or
that the network device does not support an intermediate model representation framework.

8. The model interaction method according to claim 2, further comprising:
sending second indication information to the terminal device, wherein the second indication information is used to indicate the terminal device to report a model to the network device,
wherein the network device meets one of:
that a first candidate of a plurality of candidates for framework information supported by the network device is the same as the first framework information; or
that the network device supports the model conversion.

9. The model interaction method according to claim 2, further comprising:
sending second indication information to the terminal device, wherein the second indication information is used to indicate the terminal device to select the first framework information from a plurality of pieces of first framework information.

10. The model interaction method according to claim 2, further comprising:
determining whether or not the network device supports an intermediate model representation framework, to obtain a first determination result;
determining whether or not the network device supports the model conversion, to obtain a second determination result; and
sending a first AI model to the terminal device based on the first determination result and/or the second determination result.

11. The model interaction method according to claim 8, further comprising:
receiving a third AI model sent by the terminal device, wherein the third AI model is generated by the terminal device based on a content indicated by the network device;
wherein the content indicated by the network device at least comprises a content indicated in the second indication information.

12. The model interaction method according to claim 2, further comprising:
selecting the first framework information from a plurality of pieces of first framework information;
sending third indication information to the terminal device, wherein the third indication information is used to indicate the first framework information selected to the terminal device;
generating a first AI model based on the selected first framework information; and
sending the first AI model to the terminal device.

13. The model interaction method according to claim 12, wherein selecting the first framework information from the plurality of pieces of first framework information comprises:
determining a first candidate of a plurality of candidates for framework information supported by the network device; and
selecting the first framework information from the plurality of pieces of first framework information based on the first candidate, wherein the selected first framework information comprises the selected first AI model framework, and the selected first framework information comprises any one of:
the first framework information which is the same as the first candidate; or
the first framework information which is different from the plurality of candidates for framework information, wherein a first candidate framework to which the plurality of candidates for framework information belongs supports to convert a model into a model supported by the selected first framework information.

14. The model interaction method according to claim 13, further comprising:
converting the first AI model into a fourth AI model based on the selected first AI model framework, wherein the second AI model framework determined based on the selected first framework information supports the model conversion, and the first AI model is generated by the network device based on the second AI model framework; and
sending the fourth AI model to the terminal device.

15. The model interaction method according to claim 10, wherein sending the first AI model to the terminal device based on the first determination result and/or the second determination result comprises:
determining a model issuing mode, wherein the first determination result indicates that the network device supports the intermediate model representation framework, and the second determination result indicates that the network device supports the model conversion; and
sending the first AI model to the terminal device based on the model issuing mode.

16. The model interaction method according to claim 10, wherein sending the first AI model to the terminal device based on the first determination result and/or the second determination result comprises:
processing the first AI model based on the intermediate model representation framework to obtain an AI model file, wherein the first determination result indicates that the network device supports the intermediate model representation framework, and the second determination result indicates that the network device does not support the model conversion; and
sending the AI model file to the terminal device.

17. The model interaction method according to claim 16, further comprising:
sending second indication information to the terminal device, wherein the second indication information indicates an AI model storage format of the AI model file, and the AI model file does not carry model format information.

18. A model interaction method for a heterogeneous AI framework, performed by a terminal device, comprising:
indicating first framework information supported by the terminal device to a network device, wherein the first framework information comprises a first AI model framework supported by the terminal device.

19. The model interaction method according to claim 18, wherein the first framework information comprises any one of:
framework information indicating that the terminal device supports a model deployment; or
framework information indicating that the terminal device supports a model conversion.

20. The model interaction method according to claim 18 or 19, further comprising:
sending first indication information to the network device, wherein the first indication information is used to indicate the first framework information supported by the terminal device.

21. The model interaction method according to claim 19, wherein determining the first framework information supported by the terminal device comprises:
determining second framework information supported by the network device, wherein the second framework information comprises a second model framework supported by the network device; and
determining the first framework information supported by the terminal device based on a predefined protocol and/or the second framework information.

22. The model interaction method according to claim 19, further comprising:
receiving a first AI model sent by the network device, wherein the first AI model is generated by the network device; or
receiving a second AI model sent by the network device, wherein the second AI model is obtained by the network device by converting a first AI model based on the first framework information or based on an intermediate model representation framework, and the first AI model is generated by the network device.

23. The model interaction method according to claim 19, further comprising:
receiving second indication information sent by the network device, wherein the second indication information is used to indicate that a cell to which the network device belongs does not support an AI model deployment based on the first framework information.

24. The model interaction method according to claim 19, further comprising:
receiving second indication information sent by the network device, wherein the second indication information is used to indicate the terminal device to report a model to the network device;
wherein the terminal device meets one of:
that the first framework information supported by the terminal device is the same as a first candidate of a plurality of candidates for framework information supported by the network device; or
that the first framework information supported by the terminal device is different from the plurality of candidates for framework information supported by the network device.

25. The model interaction method according to claim 19, further comprising:
receiving second indication information sent by the network device, wherein the second indication information is used to indicate the terminal device to select the first framework information from a plurality of pieces of first framework information,
wherein the terminal device supports a plurality of pieces of first framework information.

26. The model interaction method according to claim 24, further comprising:
determining framework information indicated by the network device based on a content indicated in the second indication information;
generating a third AI model based on the framework information indicated by the network device; and
sending the third AI model to the network device.

27. The model interaction method according to claim 19, further comprising:
receiving a fourth AI model sent by the network device.

28. The model interaction method according to claim 19, further comprising:
receiving an AI model file sent by the network device, wherein the AI model file is obtained by the network device by processing a first AI model based on an intermediate model representation framework, the first AI model is generated by the network device based on a second model framework, and the second model framework is determined based on the first framework information.

29. The model interaction method according to claim 28, further comprising:
receiving second indication information sent by the network device, wherein the second indication information indicates an AI model storage format of the AI model file, and the AI model file does not carry model format information.

30. A model interaction method for a heterogeneous AI framework, performed by a network device, comprising:
indicating second framework information supported by the network device to a terminal device, wherein the second framework information comprises a second AI model framework supported by the network device.

31. The model interaction method according to claim 30, wherein the second framework information comprises any one of:
framework information indicating that the network device supports a model deployment; or
framework information indicating that the network device supports a model conversion.

32. The model interaction method according to claim 29, further comprising:
receiving a first AI model sent by the terminal device, wherein the first AI model is generated by the terminal device based on a first AI model framework comprised in first framework information supported by the terminal device, and the first framework information is determined based on the second framework information; or
receiving first indication information sent by the terminal device, wherein the first indication information indicates first framework information and indicates that a first AI model does not carry model format information; or
sending second indication to the terminal device, wherein the second indication information indicates that the network device supports an intermediate model representation framework; or
receiving a second AI model sent by the terminal device, wherein the second AI model is generated by the terminal device.

33. A model interaction method for a heterogeneous AI framework, performed by a terminal device, comprising:
determining second framework information supported by a network device, wherein the second framework information comprises a second AI model framework supported by the network device.

34. The model interaction method according to claim 33, wherein the second framework information comprises any one of:
framework information indicating that the network device supports a model deployment; or
framework information indicating that the network device supports a model conversion.

35. The model interaction method according to claim 34, further comprising:
determining a first model framework corresponding to the second framework information, generating a first AI model based on the first model framework, and sending the first AI model to the network device; or
sending first indication information to the network device, wherein the first indication information indicates first framework information and indicates that the first AI model does not carry model format information; or
receiving second indication information sent by the network device, wherein the second indication information indicates that the network device supports an intermediate model representation framework; or
determining whether or not the terminal device supports an intermediate model representation framework to obtain a third determination result, determining whether or not the terminal device supports a model conversion to obtain a fourth determination result, and sending a second AI model to the network device based on the third determination result and/or the fourth determination result, wherein the network device supports an intermediate model representation framework, and the second AI model is generated by the terminal device.

36. A communication apparatus, comprising:
a processing module configured to determine first framework information supported by a terminal device, and determine a second AI model framework corresponding to the first framework information, wherein the first framework information comprises a first AI model framework supported by the terminal device; and
a transceiver module configured to indicate second framework information supported by a network device to the terminal device, wherein the second framework information comprises the second AI model framework supported by the network device.

37. A communication apparatus, comprising:
a transceiver module configured to indicate first framework information supported by a terminal device to a network device, wherein the first framework information comprises a first AI model framework supported by the terminal device; and
a processing module configured to determine second framework information supported by the network device, wherein the second framework information comprises a second AI model framework supported by the network device.

38. A communication system, comprising a network device and a terminal device, wherein the network device is configured to execute the model interaction method according to any one of claims 1 to 17, and the terminal device is configured to execute the model interaction method according to any one of claims 18 to 29.

39. A communication system, comprising a network device and a terminal device, wherein the network device is configured to execute the model interaction method according to any one of claims 30 to 32, and the terminal device is configured to execute the model interaction method according to any one of claims 33 to 35.

40. A computer-readable storage medium storing therein instructions, wherein, when the instructions are executed, the model interaction method according to any one of claims 1 to 35 is implemented.
